# EUROPEAN PATENT APPLICATION

(11) **EP 4 803 686 A1**
(43) Date of publication of application: **09.09.2026**
(21) Application number: 24908254.6
(22) Date of filing: 11.12.2024
(51) Int. Cl.: D06F 37/22, D06F 37/26, D06F 37/04, D06F 25/00, D06F 39/12, F16F 15/06

(54) **CLOTHING PROCESSING DEVICE**

(30) Priority: 22.12.2023 KR 20230190510; 08.10.2024 KR 20240136752
(71) Applicant: LG Electronics Inc., Yeongdeungpo-gu Seoul 07336 (KR)
(72) Inventor: KIM, Jinwoong, Seoul 08592 (KR); KIM, Hyundong, Seoul 08592 (KR); KIM, Bongjae, Seoul 08592 (KR); CHOI, Wonick, Seoul 08592 (KR)
(74) Representative: Ter Meer Steinmeister & Partner
(86) International application number: PCT/KR2024/096692
(87) International publication number: WO 2025/135972

(57) **Abstract**

The present invention provides a clothing processing device. In an embodiment, a clothing processing device of the present disclosure includes: a tub which is provided in a cabinet and stores washing water; a drum which is rotatably provided in the tub and in which laundry is accommodated; multiple springs for buffering vibration of the tub; and a support frame for supporting a load of the tub, the load being transmitted by the multiple springs, wherein the multiple springs support a lower part of the tub in a front-rear direction and a left-right direction and are provided with at least four springs wound in a single direction; among the four springs, two springs arranged at a front side and two springs arranged at a rear side are arranged to be symmetrical to each other forward and backward or among the four springs, two springs arranged at a left side and two springs arranged at a right side are arranged to be symmetrical to each other left and right; and thus each of the multiple springs offsets a rotational force applied to the tub.

## Description

### [Technical Field]

The present disclosure relates to a laundry treating apparatus. More particularly, the present disclosure relates to a commercial laundry treating apparatus capable of performing at least one of a washing operation of removing foreign matter from laundry using detergent and a drying operation of supplying steam or hot air to laundry to sterilize, de-wrinkle, deodorize, and dry the laundry.

### [Background]

Generally, a laundry treating apparatus performs an arbitrary course for treating laundry and may include a washing machine for performing a washing operation and a dryer for performing a drying operation.

Although a washing machine and a dryer are typically provided separately, a laundry treating apparatus capable of simultaneously performing washing and drying operations has emerged to overcome space constraints and enhance user convenience.

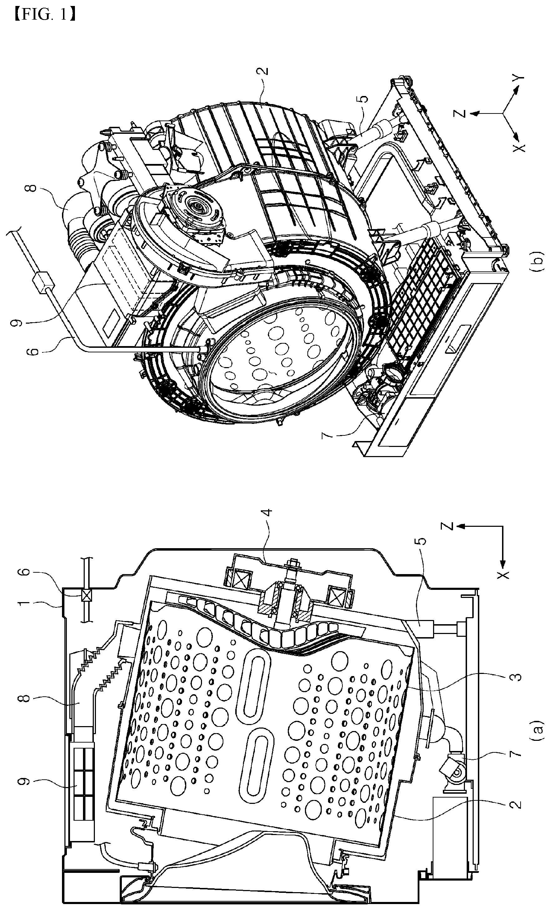

FIG. 1 shows a conventional laundry treating apparatus capable of performing both washing and drying operations.

The conventional laundry treating apparatus may include a cabinet 1, a tub 2 for accommodating water, a drum 3 configured to be rotated while accommodating laundry, a driving unit 4 fixed to the tub 2 to rotate the drum 3, a support 5 for supporting the tub 2, a water supply unit 6 for supplying water to the tub 2, and a drain unit 7 for draining water from the tub 2, and therefore the laundry treating apparatus may have the configuration of a washing machine for performing a washing operation.

In addition, the conventional laundry treating apparatus may further include a circulation unit 8 for circulating air between the interior of the tub 2 and the exterior of the tub 2 and a heating unit 9 installed in the circulation unit 8 to heat the air. Accordingly, hot air may be supplied to the tub 2, and therefore the laundry treating apparatus may have the configuration of a dryer for performing a drying operation.

Particularly, in the conventional laundry treating apparatus, the configuration of the dryer is seated on the tub 2 in order to avoid interference with the drain unit 7 and to provide a sufficient volume for the circulation unit 8 and the heating unit 9. Consequently, the tub 2 is configured to further support the configuration of the dryer, and as a result, stability in terms of vibration is achieved, as if a load balancer, such as cement, is added to the tub 2.

As such, the conventional laundry treating apparatus has the advantage of installing both the configuration of the washing machine and the configuration of the dryer in the cabinet 1, allowing users to selectively perform washing and drying operations as desired.

However, a commercial laundry treating apparatus is generally configured to treat larger volumes of laundry than a household laundry treating apparatus or to treat heavy items such as bedding.

Therefore, it is necessary for the commercial laundry treating apparatus to have a larger volume than the household laundry treating apparatus to accommodate heavy and bulky laundry.

In this situation, if both the configuration of the washing machine and the configuration of the dryer are installed in the cabinet of the commercial laundry treating apparatus, there is a fundamental problem: either the limited cabinet size makes it impossible to achieve a laundry capacity suitable for commercial use, or the cabinet size restrictions are removed, whereby the laundry treating apparatus becomes excessively bulky and heavy, making it difficult to transport and install the laundry treating apparatus.

In particular, a commercial dryer must be made of heavy-duty metal in order to accommodate a large amount of water required to treat heavy and bulky laundry and to withstand the significant vibration generated when the drum is rotated.

Given that the tub may be extremely heavy, if the configuration of the dryer is seated on the tub, as in the household laundry treating apparatus, there is a high likelihood that the tub cannot be stably supported.

Therefore, it is necessary for the commercial laundry treating apparatus to adopt a different method of disposing or coupling the configuration of the dryer on or to the configuration of the washing machine, unlike the conventional household laundry treating apparatus.

In addition, if both the washing machine and the dryer are installed in the commercial laundry treating apparatus, the volume of the laundry treating apparatus excessively increases. However, if the washing machine and the dryer are disposed separately, installation space constraints occur and users must go through the trouble of transferring a large amount of laundry between the washing machine and the dryer after washing. In the commercial laundry treating apparatus, therefore, it is difficult to dispose both the configuration of the washing machine and the configuration of the dryer, and it is undesirable to omit the configuration of the dryer from the configuration of the washing machine.

### [Summary]

### [Technical Problem]

An aspect of the present disclosure is to provide a laundry treating apparatus that allows a dryer for performing a drying operation of drying laundry to be selectively installed on a washing machine for performing a washing operation.

Another aspect of the present disclosure is to provide a laundry treating apparatus that allows a dryer to stably communicate with a tub for storing water even if the tub is made of metal.

Another aspect of the present disclosure is to provide a laundry treating apparatus capable of stably supporting the load of a dryer even when the dryer communicates with a tub made of metal.

Another aspect of the present disclosure is to provide a laundry treating apparatus including a support structure capable of stably supporting a large and heavy tub.

Another aspect of the present disclosure is to provide a laundry treating apparatus configured such that a plurality of springs is used to support a large and heavy tub and twisting of the tub caused by rotation of the tub supported by the plurality of springs is prevented.

Another aspect of the present disclosure is to provide a laundry treating apparatus configured such that a plurality of springs wound in a single direction is used to prevent the springs from becoming entangled and twisting of a tub is prevented.

Another aspect of the present disclosure is to provide a laundry treating apparatus configured such that a plurality of springs wound in a single direction is used to enhance the manufacturer's production convenience.

### [Technical Solution]

The present disclosure provides a laundry treating apparatus. In an embodiment, a laundry treating apparatus of the present disclosure includes a cabinet, a tub provided in the cabinet, the tub being configured to store wash water, a drum rotatably provided in the tub, the drum being configured to accommodate laundry, a plurality of springs configured to absorb vibration of the tub, and a support frame configured to support the load of the tub transmitted by the plurality of springs, wherein the plurality of springs includes at least four springs configured to support a lower part of the tub in a front-to-back direction and a left-to-right direction, the plurality of springs being wound in a single direction, and the two springs disposed at the front and the two springs disposed at the rear are disposed in front-to-back symmetry, or the two springs disposed on the left and the two springs disposed on the right are disposed in left-to-right symmetry, whereby each of the plurality of springs cancels out rotational force applied to the tub.

In an embodiment, the plurality of springs may be disposed such that upper ends of the two springs disposed at the front and upper ends of the two springs disposed at the rear are disposed so as to face each other or to face away from each other, thereby achieving the front-to-back symmetry, or upper ends of the two springs disposed at the left and upper ends of the two springs disposed at the right are disposed so as to face each other or to face away from each other, thereby achieving the left-to-right symmetry.

In an embodiment, the laundry treating apparatus may further include a spring holder coupled to at least one end of the spring, the spring holder being configured to fix the spring, wherein the spring holder may be seated on the support frame and guide a coupling direction of the spring.

In an embodiment, the spring holder may include a spring terminal configured to restrict one end of the spring to fix the spring at a set position and a seating guide configured to guide the seating position and the seating direction of the spring holder seated on the support frame, and the seating position and the seating direction of the spring holder may determine the coupling direction of the spring and dispose the plurality of springs in the front-to-back symmetry or the left-to-right symmetry.

In an embodiment, the spring holder may include a flat seating body provided with the seating guide and a cylindrical coupling body protruding from the seating body, the coupling body being provided on an outer circumferential surface thereof with the spring terminal, and the spring may be coupled to the outer circumferential surface of the coupling body.

In an embodiment, the seating guide may include a guide protrusion protruding from the seating body in a direction opposite the coupling body, the support frame may be provided with a guide recess configured to receive the guide protrusion, and the seating position and the seating direction of the spring holder may be defined by coupling between the guide protrusion and the guide recess.

In an embodiment, the support frame may further include an upper support frame on which the circumference of a lower surface of the tub is seated and a lower support frame disposed under the upper support frame so as to be spaced apart from the upper support frame, the spring may be provided between the upper support frame and the lower support frame, the spring may be seated on the lower support frame, and the upper support frame may be seated on the spring.

In an embodiment, the spring holder may be further coupled to the other end of the spring, and the upper support frame may be seated on the spring holder.

In an embodiment, the plurality of springs may be provided so as to be inclined toward the inside of the cabinet.

In an embodiment, a seating surface of the support frame on which the spring holder is seated may be provided so as to be inclined toward the inside of the cabinet.

In an embodiment, the plurality of springs may have identical specifications, including the diameter and the number of turns.

### [Advantageous Effects]

The present disclosure has the effect of selectively installing a dryer for performing a drying operation of drying laundry on a washing machine for performing a washing operation.

The present disclosure has the effect of allowing a dryer to stably communicate with a tub for storing water even if the tub is made of metal.

The present disclosure has the effect of stably supporting the load of a dryer even when the dryer communicates with a tub made of metal.

The present disclosure has the effect of stably supporting a large and heavy tub through a support structure capable of stably supporting the tub.

The present disclosure has the effect of preventing twisting of a tub caused by rotation of the tub supported by a plurality of springs.

The present disclosure has the effect of using a plurality of springs wound in a single direction, thereby preventing the springs from becoming entangled.

The present disclosure has the effect of reducing the possibility of misassembly and achieving uniform quality by preventing the entanglement of springs.

The present disclosure has the effect of using a plurality of springs wound in a single direction, thereby enhancing the manufacturer's production convenience.

### [Brief Description of Drawings]

FIG. 1 shows a conventional laundry treating apparatus capable of performing both washing and drying operations.
FIG. 2 shows an embodiment of a laundry treating apparatus of the present disclosure.
FIG. 3 shows an embodiment in which the laundry treating apparatus of the present disclosure is separated and coupled.
FIG. 4 shows a washing main body of the laundry treating apparatus of the present disclosure.
FIG. 5 shows a structure in which a door can be installed on a tub of the laundry treating apparatus of the present disclosure.
FIG. 6 shows a door structure of the laundry treating apparatus of the present disclosure.
FIG. 7 shows the internal structure of the tub of the laundry treating apparatus of the present disclosure.
FIG. 8 shows the exterior of a drum of the laundry treating apparatus of the present disclosure.
FIG. 9 shows a drum rear surface of the drum of the laundry treating apparatus of the present disclosure.
FIG. 10 shows the coupling structure between the drum and the tub of the laundry treating apparatus of the present disclosure.
FIG. 11 shows the rear of the tub of the laundry treating apparatus of the present disclosure.
FIG. 12 shows the structure of a support of the laundry treating apparatus of the present disclosure.
FIG. 13 shows the detailed structure of the support of the laundry treating apparatus of the present disclosure.
FIG. 14 shows the coupling structure between the tub and the support of the laundry treating apparatus of the present disclosure.
FIG. 15 shows a driving unit of the laundry treating apparatus of the present disclosure.
FIG. 16 shows a detailed embodiment of the driving unit of the laundry treating apparatus of the present disclosure.
FIG. 17 shows the structure of a bearing housing.
FIG. 18 shows a water supply unit of the laundry treating apparatus of the present disclosure.
FIG. 19 shows a drain unit of the laundry treating apparatus of the present disclosure.
FIG. 20 shows the relationship between the drain unit and a circulation unit of the laundry treating apparatus of the present disclosure.
FIG. 21 shows the circulation unit of the laundry treating apparatus of the present disclosure.
FIG. 22 shows a removable module of the laundry treating apparatus of the present disclosure.
FIG. 23 shows the structure of a flow path forming portion of the removable module of the present disclosure.
FIG. 24 shows a refrigerant circuit including an auxiliary heat exchanger of the laundry treating apparatus of the present disclosure.
FIG. 25 shows the internal structure of the auxiliary heat exchanger of the laundry treating apparatus of the present disclosure.
FIG. 26 shows an embodiment in which the auxiliary heat exchanger of the laundry treating apparatus of the present disclosure is operated.
FIG. 27 shows a specific structural embodiment of a front panel.
FIG. 28 shows a structure for moving air that has entered a case of the laundry treating apparatus of the present disclosure.
FIG. 29 shows the flow path relationship between the front panel and a blowing fan of the auxiliary heat exchanger.
FIG. 30 is a view illustrating the detailed structure of the support and the arrangement of a spring holder of the laundry treating apparatus of the present disclosure.
FIG. 31 shows the detailed structure of the spring holder of the laundry treating apparatus of the present disclosure.
FIG. 32 shows the state in which a spring is fixed to the spring holder.
FIG. 33 is a view illustrating the coupling relationship between the spring holder and an upper support frame of the laundry treating apparatus of the present disclosure.
FIG. 34 is a view illustrating the connection structure between a lower support frame and the upper support frame of the laundry treating apparatus of the present disclosure.
FIG. 35 is a view illustrating the arrangement of springs according to an embodiment of the laundry treating apparatus of the present disclosure.
FIG. 36 is a view illustrating the arrangement of springs according to another embodiment of the laundry treating apparatus of the present disclosure.

### [Best Mode]

Hereinafter, embodiments disclosed herein will be described in detail with reference to the accompanying drawings. In this specification, the same and similar configurations are denoted by the same and similar reference numerals even in different embodiments, and the descriptions thereof refer to the first description. As used herein, singular expressions include plural expressions unless the context clearly indicates otherwise. In addition, in describing the embodiments disclosed herein, a detailed description of related prior art is omitted when such detailed description would obscure the gist of the embodiments disclosed herein. It should also be noted that the accompanying drawings are intended only to facilitate understanding of the embodiments disclosed herein, and should not be construed as limiting the technical ideas disclosed herein.

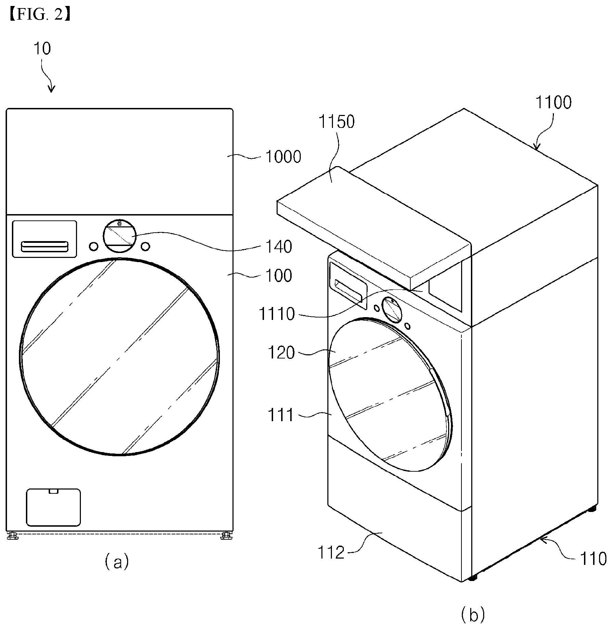

FIG. 2 shows an embodiment of a laundry treating apparatus of the present disclosure.

Referring to FIG. 2(a), the laundry treating apparatus 10 of the present disclosure may include a main module 100 for treating laundry. The main module 100 may be configured to perform a washing operation of removing foreign matter from the laundry using water and detergent.

The laundry treating apparatus of the present disclosure may further include a removable module 1000 coupled to the main module 100. The removable module 1000 may be configured to supply hot air into the main module 100.

The main module 100 may be configured to further perform a drying operation of removing moisture from the laundry when the removable module 1000 is coupled thereto.

In the laundry treating apparatus of the present disclosure, therefore, the main module 100 may be used as a washing machine when the main module 100 is provided independently, and the main module 100 may be used as both a washing machine and a dryer when the main module 100 and the removable module 1000 are provided together.

As a result, depending on the user's circumstances and preferences, only the main module 100 may be installed, or the removable module 1000 may be coupled to the main module 100 for installation.

In particular, when the main module 100 is configured to treat a large amount of laundry, such as in a commercial laundry treating apparatus, and thus has a larger overall volume than a household laundry treating apparatus, the option to selectively couple the removable module 1000 may be more useful for any user who may face installation space constraints.

Furthermore, since the removable module 1000 is provided separately from the main module 100, the main module 100 may be prevented from becoming excessively large, bulky, or heavy, and a process of manufacturing the main module 100 and the removable module 1000 and a process of installing or transporting the main module 100 and the removable module 1000 may be simplified.

A control panel 140 for allowing a command for treating laundry to be input therethrough or to display the state of the main module may be coupled to the main module 100. The control panel 140 may be configured to allow an arbitrary course in which the main module 100 can perform a washing or drying operation to be input therethrough.

The control panel 140 may be provided as a touch panel or a rotary knob, and may have any configuration as long as the control panel can allow a user to input a command therethrough or display the state of the main module 100.

Referring to FIG. 2(b), the main module 100 may include a cabinet 110 that forms the exterior thereof.

The cabinet 110 may include a front panel 111 that forms at least a part of a front surface of the main module 100 and has an opening through which laundry is inserted and removed and a door 120 for opening and closing the opening.

Meanwhile, various electrical components for laundry treatment may be mounted in the cabinet 110. Therefore, to facilitate the repair or replacement of the electrical components, the laundry treating apparatus of the present disclosure may further include a cover panel 112 that is disposed lower than the front panel 111 and forms a part of a front surface of the cabinet 100. The cover panel 112 may be provided lower than the door 120 so as to be removal from the cabinet.

Consequently, even if a wall or another home appliance is disposed beside the cabinet 110, the cover panel 112 may be separated from and coupled to the cabinet without being affected by such placement. When the cover panel 112 is separated, the components disposed in the cabinet 100 may be inspected, repaired, or replaced without separating the door 120.

The removable module 1000 may include a case 1100 that is configured to be seated on the cabinet 110 and forms the exterior of the removable module.

The case 1100 may be seated on the cabinet 110.

A flow path through which air from in the main module 100 can circulate and an electrical component for heating the air may be disposed in the case 1100.

The case 1100 may include a front panel 1110 that forms a front surface of the case and a front door 1150 rotatably mounted on the front panel 1110 to expose the front panel 1110 or the interior of the case 1100.

The front door 1150 may not only serve to protect the components in the case 1100, such as a control panel installed on the front panel 1110, but may also be made of the same material as the cabinet 110, thereby providing a sense of unity with the main module 100.

The cabinet 110 may be configured to support the removable module 1000.

The cabinet 110 may be configured to support the total load of the removable module 1000. Consequently, the main module 100 may prevent the load of the removable module 1000 from being applied to the components in the cabinet and prevent vibration generated in the cabinet 110 from being transmitted to the removable module 1000.

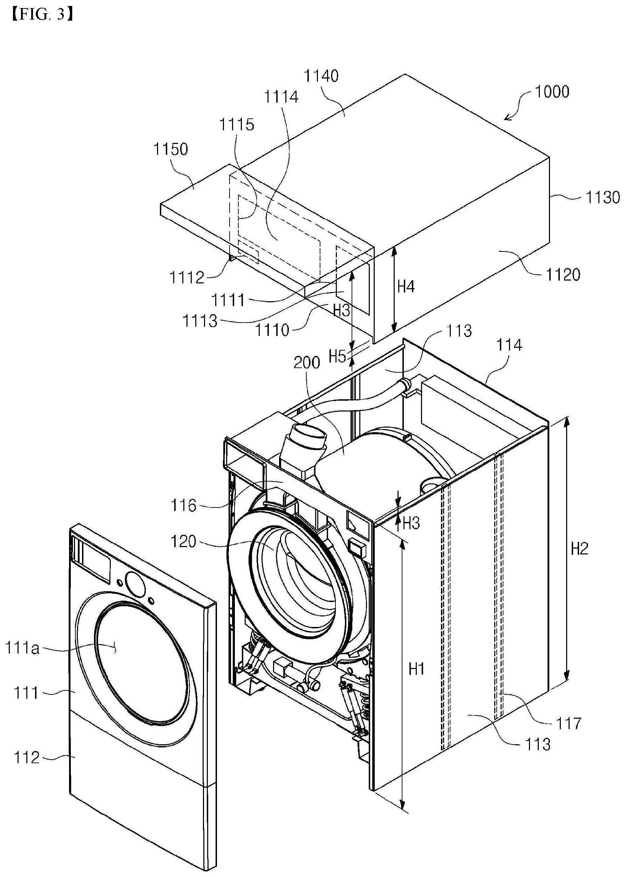

FIG. 3 shows an embodiment in which the laundry treating apparatus of the present disclosure is separated and coupled.

The removable module 1000 may be removably coupled to the cabinet 110. As a result, the removable module 1000 may be coupled to or separated from the cabinet 110 as needed.

When the removable module 1000 is separated from the cabinet 110, the main module 100 may fully perform the functions of a washing machine, and when the removable module 1000 is coupled to the cabinet 110, the main module 100 may further perform the functions of a dryer.

The cabinet 110 may further include a side panel 113 that is coupled to a rear surface of the front panel 111 and extends rearward to form a side surface of the cabinet and a rear panel 114 that is coupled to a rear surface of the side panel 113 to form a rear surface of the cabinet.

The cabinet 110 may further include a fixing frame 116 capable of fixing the positions of two side panels 113.

The fixing frame 116 may be disposed at upper parts of front surfaces of the side panels 113 and coupled to the side panels 113 on both sides to fix the side panels 113.

The fixing frame 116 may be provided at the front thereof with an area in which the front panel 111can be fixed, and a component to which the front panel 111can be coupled may be installed on the fixing frame.

The fixing frame 116 may be configured to support components that must be exposed on the front surface of the cabinet 110, such as a detergent box, a control panel, and a coin slot.

The front panel 111 may be removably mounted on at least one of the fixing frame 116 and the side panel 113.

An upper panel that forms an upper surface of the cabinet 110 may be coupled to upper parts of the front panel 111, the side panel 113, and the rear panel 114.

The upper panel may be removably coupled to the front panel 111, the side panel 113, and the rear panel 114.

When the removable module 1000 is not installed on the cabinet 110, the upper panel may be coupled to the upper parts of the front panel 111, the side panel 113, and the rear panel 114 to prevent the interior of the cabinet 110 from being exposed to the outside.

Furthermore, when the upper panel is separated from the cabinet 110, a space in which the removable module 1000 is seated may be formed at the upper parts of the front panel 111, the side panel 113, and the rear panel 114.

The cabinet 110 may be provided at an upper part thereof with an upper step H3 configured to allow the upper panel and the removable module 1000 to be stably seated on the cabinet.

When seated on the cabinet 110, the upper panel or the removable module 1000 may be supported by the upper step H3, whereby the upper panel or the removable module may be prevented from being separated from the cabinet 110.

The upper step H3 may be provided at an upper perimeter of the cabinet 110 so as to protrude farther than other parts.

Alternatively, the upper step H3 may be provided at the upper perimeter of the cabinet 110 so as to be more deeply recessed than other parts.

For example, the front panel 111 may be coupled to a front surface of the side panel 113 such that an upper end of the front panel 111 is higher than an upper end of the side panel 113 to form the upper step H3.

The upper end of the front panel 111forms the upper step H3, an upper end of the fixing frame 116 may also be formed higher than the upper end of the side panel 113 to form the upper step H3.

Even if the height of the front panel 111 is less than the height H2 of the side panel 113, the front panel may be coupled to at least one of the side panel 113 and the fixing frame 116 at a position higher than the upper end of the side panel 113 to form the upper step H3.

As a result, the sum H1 of the heights of the front panel 111 and the cover panel 112 may be greater than the height H2 of the side panel 113 by the length of the upper step H3.

Furthermore, the height H1 of the rear panel 114 may be greater than the height H2 of the side panel 113 to form the upper step H3. That is, the height H1 of the rear panel 114 may be greater than the height H2 of the side panel by the length of the upper step H3.

Consequently, the upper end of the front panel 111 and the upper end of the rear panel 114 may form the upper step H3. As a result, the upper end of the front panel 111 and the upper end of the rear panel 114 may support the upper panel or support the front and rear of the lower part of the case 1100.

This is merely one embodiment, and the upper step H3 may be provided in any shape and at any position as long as it is possible to stably fix at least one of the case 1100 and the upper panel. For example, the upper end of the front panel 111 and the upper end of the rear panel 114 may be located lower than the upper end of the side panel 113 to form the upper step H3. In this case, the upper step H3 may be recessed along the upper perimeter of the cabinet 110.

The case 1100 of the removable module 1000 may include a front panel 1110 forming a front surface thereof, side panels 1120 extending rearward from both ends of the front panel 1110, a rear panel 1130 configured to connect rear surfaces of the side panels 1120 to each other, and an upper panel 1140 coupled to upper surfaces of the front panel 1110, the side panels 1120, and the rear panel 1130.

The width of the front panel 1110 may correspond to the width of the front panel 111, the length of the side panel 1120 may correspond to the length of the side panel 113, and the width of the rear panel 1130 may correspond to the width of the rear panel 114.

A lower surface of the case 1100 and an upper surface of the cabinet 110 may be coupled to each other without any gaps in up-and-down and left-to-right directions.

For example, the lower part of the case 1100 and the upper part of the cabinet 110 may be coupled to or interlocked with each other.

For example, when the case 1100 is seated on the cabinet 110, the cabinet 110 and the case 1100 may be disposed side by side in the height direction without any step difference, like a single plane, and an effect similar to the case 1100 extending vertically from the cabinet 110 may be achieved.

Furthermore, the ingress of moisture or outside air through the area in which the case 1100 and the cabinet 110 are coupled to each other may be prevented.

The case 1100 may be provided at the lower surface thereof with a lower step H5 configured to be seated on the upper step H3 of the cabinet 110.

The lower step H5 may be interlocked with the upper step H3.

When the case 1100 is seated on the cabinet 110, the lower step H5 may be supported by the upper step H3. For example, the lower step H5 may be in contact with or interlocked with both ends of the upper step H3.

If the upper step H3 is configured to protrude, the lower step H5 may be recessed by the protruding length of the upper step H3. Alternatively, if the upper step H3 is configured to be recessed, the lower step H5 may protrude by the recessed depth of the upper step H3.

For example, the lower step H5 may be formed as the result of the lower end of the front panel 1110 being disposed higher than the lower end of the side panel 1120.

The height H3 of the front panel 1110 may be less than the height H4 of the side panel 1120 by the length of the lower step H5. Furthermore, the height H3 of the rear panel 1130 may be less than the height H4 of the side panel 1120 by the length of the lower step H5. As a result, the lower step H5 may be formed at each of a front lower part and a rear lower part of the case 1100.

When the case 1100 is seated on the cabinet 110, the upper step H3 and the lower step H5 may be interlocked with each other, whereby the upper step H3 may be supported between the side panels 1120 of the case 1100, and therefore tipping over of the case 1100 may be prevented.

Meanwhile, the thickness of the upper step H3 may be equal to or less than the thickness of the upper panel.

The front panel 1110 may be provided with a filter communication hole 1111 communicating with the interior of the case 1100. The filter communication hole 1111 may be configured to allow a filter provided in the removable module 1000 to be inserted and removed therethrough.

The front panel 1110 may further include a filter door 1113 that opens and closes the filter communication hole 1111. The filter door 1113 may be rotatably coupled to one side surface of the filter communication hole 1111 to selectively open the filter communication hole 1111.

The front panel 1110 may further include an internal communication hole 1112 capable of drawing in external air. The internal communication hole 1112 may be formed through the front panel 1110 so as to be spaced apart from the filter communication hole 1111. The internal communication hole 1112 may be configured to allow outside air to flow into the case 1100 therethrough.

The case 1100 may include a front door 1150 disposed in front of the front panel 1110 to cover the front panel 1100.

The front door 1150 may be rotatably coupled to the upper panel 1140 or the front panel 1110 to prevent the internal communication hole 1112 and the filter door 1113 disposed at the front panel 1110 from being exposed to the outside.

The front panel 1110 may further include a control communication hole 1115 that is spaced apart from the internal communication hole 1112 and the filter communication hole 1111 and allows the interior and exterior of the front panel to communicate with each other and a rotating body 1114 for opening and closing the control communication hole 1115.

The front door 1150 may have an area equal to or greater than the area of the front panel 1110.

The front door 1150 may be rotatably mounted on the front of the upper panel 1140 or on the front panel 1110. Thus, in the absence of external force, the front panel 1110 may be automatically shielded, thereby preventing the front panel 1110 from being arbitrarily exposed to the outside.

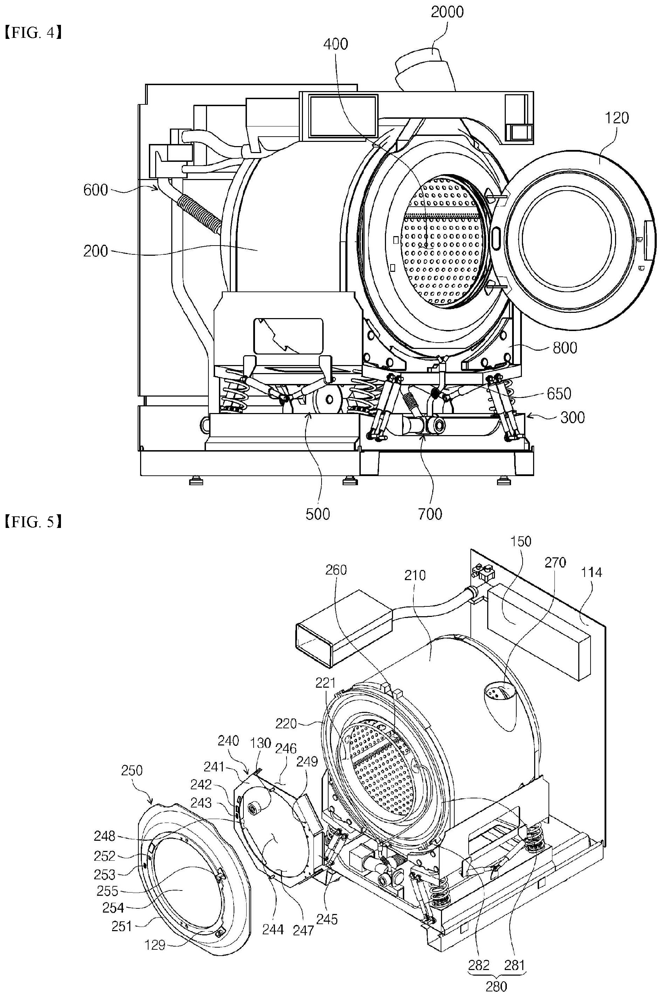

FIG. 4 shows a washing main body of the laundry treating apparatus of the present disclosure.

The main module 100 may include a tub 200 mounted in the cabinet 110 for storing water, a support 300 for supporting the tub 200 in the cabinet 110, a drum 400 mounted in the tub 200 for accommodating laundry, a driving unit 500 coupled to the tub 200 or the support 300 to rotate the drum 400, a water supply unit 600 for supplying water to the tub 200, and a drain unit 700 for draining water in the tub 200 to the outside of the cabinet 110.

The tub 200 may be formed in a cylindrical shape, and may be made of a material with higher rigidity than resin-based materials to withstand the weight and vibration of a large amount of laundry and water. For example, the tub may be made of metal.

The drum 400 may be formed in a cylindrical shape so as to be mounted in the tub 200.

The drum 400 may also be made of metal so as to stably rotate a large amount of laundry while accommodating a large amount of water.

Vibration generated when the drum 400 is rotated may be transmitted to the tub 200 via the water and laundry. Since the tub 200, which is made of metal, is heavier than a tub made of a resin material, the amplitude or energy of vibration generated by the tub 200 may be greater than in a household laundry treating apparatus.

Therefore, the support 300 may support a lower part of the tub 200 so as to not only support the heavy tub 200 but also stably support the tub 200 in the cabinet 110 even when the tub 200 vibrates.

The support 300 may support the tub 200 in the state in which the tub is seated on the support.

For example, the support 300 may support the tub 200 in contact with the circumference of the lower surface of the tub 200, or may support the lower part of the tub 200 while accommodating at least a part thereof.

The support 300 may support the lower part of the tub 200 in a front-to-back direction and the left-to-right direction.

The part of the support 300 on which the tub 200 is seated may be coupled or fixed to the tub 200. Consequently, the support 300 may vibrate and move together with the tub 200.

The main module 100 may further include a load portion 800 capable of reducing the amplitude of vibration generated by the tub 200 or damping the vibration. The load portion 800 may be installed on the support 300.

Consequently, regardless of the shape or size of the tub 200, the load portion 800 may have a sufficient area and volume, thereby constituting a heavy load. As a result, the load portion 800 may apply a heavier load to the tub 200 and the support 300, thereby effectively damping vibration generated by the tub 200.

The main module 100 may further include a communication portion 2000 for allowing the removable module 1000 and the interior of the tub 200 to communicate with each other therethrough when the removable module 1000 is coupled thereto.

The communication portion 2000 may be coupled to the tub 200 to guide hot air generated by the removable module 1000 into the tub 200.

When coupled to the tub 200, the communication portion 2000 may protrude farther upward from the cabinet 110. As a result, the communication portion may be easily coupled to a flow path forming portion 1200 formed in the case 1100.

The communication portion 2000 may be removably coupled to the tub 200. Thus, if the removable module 1000 is not installed on the main module 100, the communication portion 2000 may be separated from the tub 200 and removed.

In the main module 100, the door 120 configured to open and close an input port of the tub 200 may be installed on the tub 200.

When the door 120 is coupled to the cabinet 110 to open and close the input port of the tub 200, vibration generated by the tub 200 may be transmitted to the door 120 and the cabinet 110. In this case, since the tub 200 is made of metal and is thus heavy, and since a large amount of water and laundry is accommodated in the tub 200, there is a risk that the door 120 and the cabinet 110 may not be able to stably withstand the impact or vibration transmitted from the tub 200 or may be damaged.

In the laundry treating apparatus of the present disclosure, therefore, the door 120 may be installed on the tub 200. Consequently, the door 120 may move together with the tub 200, whereby it is possible to prevent the door 120 from being arbitrarily separated from the tub 200 or being damaged by the tub 200.

Furthermore, since the position of the door 120 that opens and closes the input port of the tub 200 is always maintained, the door 120 may reliably seal the input port of the tub 200 even when the tub 200 vibrates excessively.

FIG. 5 shows a structure in which the door can be installed on the tub of the laundry treating apparatus of the present disclosure.

The tub 200 may include a cylindrical tub body 210 seated on the support 300 to store water and a front body 220 provided in front of the tub body 210 to form an input port 221.

Not only the tub body 210 but also the front body 220 may be made of metal, ensuring sufficient rigidity to stably support the door 120.

The input port 221 may be formed through the front body 220. The front body 220 may be formed in a ring or disc shape having a diameter corresponding to the diameter of the tub body 210.

The front body 220 and the tub body 210 may be fastened to each other via a tub coupling portion 280. The tub coupling portion 280 may include a tub strap 281 disposed along the circumferences of the tub body 210 and the front body 220 and an adjuster 282 capable of applying tension to both ends of the tub strap 281.

When an outer circumferential surface of the front body 220 and an outer circumferential surface of the tub body 210 are disposed in tight contact with each other, the tub strap 281 may be disposed along overlapping parts of the front body 220 and the tub body 210, and the adjuster 282 may tighten both ends of the tub strap 281 to press the front body 220 and the tub body 210 against each other. Consequently, the coupling between the front body 220 and the tub body 210 may be maintained.

The tub strap 281 may be made of metal so as to maintain rigidity and durability, and may be provided in plural. The adjuster 282 may be provided in number corresponding to the number of the tub straps 281 so as to couple both ends of the tub straps 281 and to apply tension to the tub straps 281.

Meanwhile, in the structure in which the front body 220 is coupled to the tub body 210, it may be difficult to form an additional structure for installing the door 120 on the front body 220. Furthermore, even if the front body 220 is made of metal, the front body 220 may need to be significantly thicker than the tub body 210 or made of a material with greater rigidity in order to support the load of the door 120 and the vibration or external force transmitted from the door 120.

In view of that, the tub 200 may further include a door holder 240 coupled to the front body 220 to support the door 120.

The door holder 240 may be provided separately from the front body 220 and designed to withstand vibration or external force transmitted from the door 120. Furthermore, the door holder 240 may be made of a material with greater rigidity or thickness than the front body 220.

The door holder 240 may include a holder body 241 that provides an area to which the door 120 is coupled and in which the door is supported and one or more fixing ribs 245 extending from the holder body 241 and coupled to the front body 220.

The holder body 241 may be provided in the center thereof with a holder input port 244 that communicates with the input port 221.

The holder body 241 may be provided on one side thereof relative to the holder input port 244 with a hinge installation portion 249 on which a hinge rotatably connected to the door 120 is installed, and may be provided on the other side thereof with a fastening hole through which a hook for temporarily fixing the door 120 passes or a locking hole 243 through which a hook for locking the door 120 closed passes.

Thus, the door 120 may be removably coupled to the holder body 241. That is, the door 120 may be rotatably mounted on the tub 200 and be removably coupled to the door holder 240 to open or close the input port 221.

The holder body 241 may have a thickness allowing surface contact of the hinge for fixing the door 120.

The fixing rib 245 may be formed integrally with the holder body 241.

The fixing rib 245 may be bent from an outer surface of the holder body 241.

The fixing rib 245 may be bent from the holder body 241 and coupled to a front surface of the front body 220.

As long as the fixing rib 245 can fix the holder body 241 to the front body 220, the fixing rib 245 may be bent at any angle from the outer surface of the holder body 241. For example, the fixing rib 245 may extend perpendicularly from the holder body 241.

Consequently, the fixing rib 245 may extend in a direction different from one surface of the holder body 241, whereby the door holder 240 may be formed in a three-dimensional structure. Furthermore, the fixing rib 245 may damp vibration like a cantilever. As a result, the door holder 240 may absorb vibration or external force from the door 120 or transmitted from the tub 200 to the door 120, whereby the load-bearing capacity to support vibration and external force may be enhanced.

The holder body 241 may have an outer surface formed in a polygonal shape to facilitate the bending of the fixing rib 245. For example, the holder body 241 may be formed in a hexagonal or octagonal shape. The fixing ribs 245 may be formed in a rectangular shape extending from each corner of the holder body 241.

The door holder 240 may include an upper open surface 246 which is located above the holder body 241 and through which a communication portion 2000, which will be described later, passes. The door holder 240 may include a lower open surface 247 through which a part of a circulation unit 650, which will be described later, or the drain unit 700 passes.

The laundry treating apparatus of the present disclosure may further include a door lock 130 that locks the door 120 to prevent unintentional opening of the door. The door holder 240 may further include an installation space 248 which is disposed at a rear surface of the holder body 241 and on which the door lock 130 is seated.

The fixing rib 245 may be disposed along the circumference of the holder body 241, and may not installed at a part corresponding to at least one of the upper open surface 246, the lower open surface 247, and the installation space 248.

The input port 221 may be provided as a through-hole formed through the front body 220. Alternatively, as shown, the input port 221 may be formed in a cylindrical or ring shape protruding forward from the front body 220. Consequently, the contact area between the door 120 and the input port 221 may be increased, thereby preventing water or laundry from leaking out of the input port 221.

An inlet 260 through which air can flow into the tub 200 may be formed in an upper part of the input port 221 by cutting.

The upper open surface 246 may be configured to expose the inlet 260 upward.

Since the front body 220, the input port 221, and the door holder 240 are all made of metal, and the coupling structure thereof may have a sharp edge or pose a risk of current leakage, the laundry treating apparatus of the present disclosure may further include a door cover 250 capable of shielding the door holder 240 and the front body 220 from the front.

The door cover 250 may be made of a material different from the material of the door holder 240 and the front body 220. For example, the door cover may be made of a resin-based material or an insulating material.

The door cover 250 may be disposed in front of the door holder 240, and may be provided as a ring-shaped plate that exposes the interior of the input port 221.

The door cover 250 may have a larger diameter than the door holder 240. Consequently, it is possible to prevent not only the door holder 240 but also all components disposed behind the door holder 240 from being exposed outside the front panel 111.

The door cover 250 may include a ring-shaped cover body 251configured to shield the door holder 240 and a cover input port 254 that is disposed at the center of the cover body 251 and communicates with the input port 221.

The cover body 251 may be provided on one side thereof relative to the cover input port 254 with a cover fastening hole 252 through which a fastening member configured to fasten the fastening structure of the door 120 to the door holder 240 passes and a cover locking hole 253 through which a locking member locked to the door lock 130 passes.

Furthermore, the cover body 251 may be provided with a seating portion 255 on which a hinge 129 coupled to the door holder 240 is seated relative to the cover input port 254.

The hinge 129 may be coupled to the seating portion 255 via a fastening member, and may be supported by and fixed to a hinge installation portion 249 provided on the door holder 240.

Meanwhile, the laundry treating apparatus of the present disclosure may further include a controller 150 seated on the rear panel 114 to control one or more of the main module 100 and the removable module 1000. The controller 150 may be powered by an external power source and may be configured to send a command to the electrical components such that the main module 100 performs a washing operation capable of washing laundry and a drying operation capable of drying laundry.

The controller 150 may also determine whether the removable module 1000 is coupled to the main module 100.

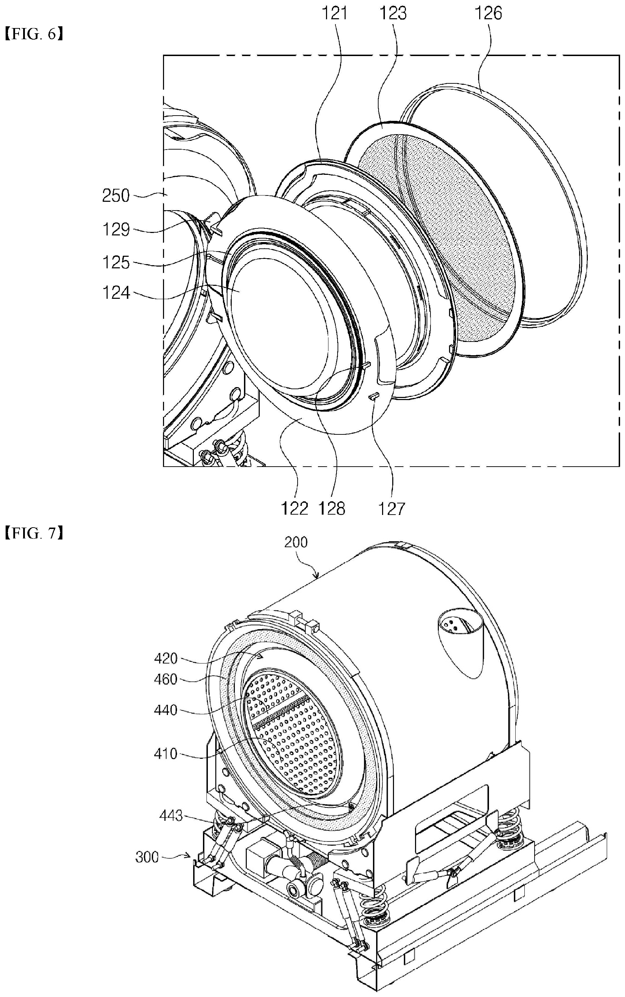

FIG. 6 shows a door structure of the laundry treating apparatus of the present disclosure.

The door 120 of the laundry treating apparatus of the present disclosure may include an outer frame 121 that is larger in area than the input port 221 and is exposed to the outside, an inner frame 122 coupled to the outer frame 121 to open and close the input port 221, and a hinge portion 129 coupled to one of the inner frame and the outer frame to rotate the door 120 about the tub 200.

A through-hole, through which the interior of the input port 221 is exposed, may be formed through the center of each of the inner frame 122 and the outer frame 121, and the door 120 may further include an inner glass 124 coupled between the inner frame 122 and the outer frame 121 to shield the through-hole while allowing light to pass therethrough.

The inner glass 124 may protrude rearward so as to be inserted into the input port 221 to guide laundry moving toward the input port 221 back into the drum 400.

The door 120 may further include a window 123 which is disposed in front of the outer frame 121 to shield an inner space of the inner glass 124 and through which light is transmitted.

The door 120 may further include a frame coupling portion 126 coupled to outer circumferential surfaces of the outer frame 121, the inner frame 122, and the window 123 to couple the outer frame 121, the inner frame 122, and the window 123 to each other. The frame coupling portion 126 may be formed in a ring shape and may be configured to receive the outer circumferential surfaces of the outer frame 121, the inner frame 122, and the window 123.

The inner frame 122 may include at least one of a fastening hook 128 protruding rearward to fix the door 120 to the input port 221 and a locking hook 129 that fixes the door 120 to the door lock 130.

One side of the outer circumferential surface of the inner frame 122 may be recessed toward the outer frame 121 to form a handle that can be gripped by a user's hand.

The door 120 may include a sealing portion 125 installed on an inner circumferential surface of the inner frame 122 in tight contact with an inner circumferential surface of the input port 221 to prevent water and laundry from leaking out of the input port 221. The sealing portion 125 may be formed in a shape corresponding to the input port 221.

The inner frame 122 may be provided on the inner circumferential surface thereof with a protrusion, at least a part of which may be inserted into an inner circumferential surface of an opening 111a, and the sealing portion 125 may be made of an elastic material that wraps around the circumference of the protrusion.

Thus, the door 120 may be fixed to the tub 200 relative to the hinge portion 129, and may be removably fixed to the tub 200 via one or more of the fastening hook 128 and the locking hook 129.

FIG. 7 shows the internal structure of the tub of the laundry treating apparatus of the present disclosure.

The tub 200 may be seated on the support 300 to receive the drum 400.

The drum 400 may include a cylindrical drum body 410 rotatably provided in the tub 200 to provide a space for storing laundry, a drum rear surface 430 coupled to the rear of the drum body 410 and connected to the driving unit 500, which will be described later, a drum front surface 420 coupled to the front of the drum body 410 and having a drum input port communicating with the input port 221, and a lifter 440 projecting from an inner circumferential surface of the drum body 410 to lift the laundry.

Both ends of the lifter 440 may be coupled to the drum front surface 420 and the drum rear surface 430 so as to be stably fixed to the drum body 410 even when supporting a large amount of laundry.

Both ends of the lifter 440 may be coupled to the drum front surface 420 and the drum rear surface 430 via a coupling member 443 such as a bolt. Consequently, the lifter 440 may be securely fixed to the drum 400, and coupling between the drum body 410, the drum front surface 420, and the drum rear surface 430 may be enhanced.

The drum 400 may be rotated in the tub 200 with a large amount of laundry loaded, which may cause excessive vibration during rotation. Therefore, the drum 400 may further include a balancer 460 capable of damping the vibration.

The balancer 460 may be formed in a ring shape and may receive balls or fluid to compensate for the eccentricity of the laundry.

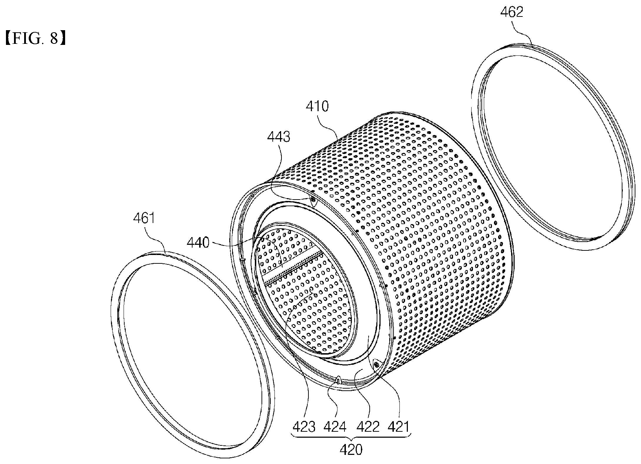

FIG. 8 shows the exterior of the drum of the laundry treating apparatus of the present disclosure.

The drum body 410 may be provided along the circumference thereof with through-holes through which water in tub 200 flows to the drum body.

The drum front surface 420 may include a seating surface 422 coupled to the inner circumferential surface of the drum body 410, a protruding surface 421 protruding forward from the seating surface 422, and a drum inlet 423 provided in an inner circumferential surface of the protruding surface 421 and communicating with the input port 221.

The drum front surface 420 may include a fastening portion 424 recessed into or protruding from the seating surface 422 to allow the coupling member 443 or the balancer 460 to be coupled thereto.

The seating surface 422 may provide a space in which the balancer 460 can be seated and may have a thickness sufficient to prevent the laundry from escaping outside the drum 400.

The protruding surface 421 may be disposed so as to face the input port 221 and may have a smaller diameter than the input port 221. At least a part of the protruding surface 421 may be disposed in the input port 221. Thus, even if the laundry is withdrawn from the drum inlet 423, trapping of the laundry between the input port 221 and the drum inlet 423 may be prevented.

The balancer 460 may have a diameter greater than the diameter of the inner circumferential surface of the seating surface 422 and equal to or less than the diameter of the outer circumferential surface of the seating surface 422 or the inner circumferential surface of the drum body 410.

The balancer 460 may include a front balancer 461 seated on the drum front surface 420 and a rear balancer 462 seated on the drum rear surface 430. The front balancer 461 and the rear balancer 462 may have the same shape.

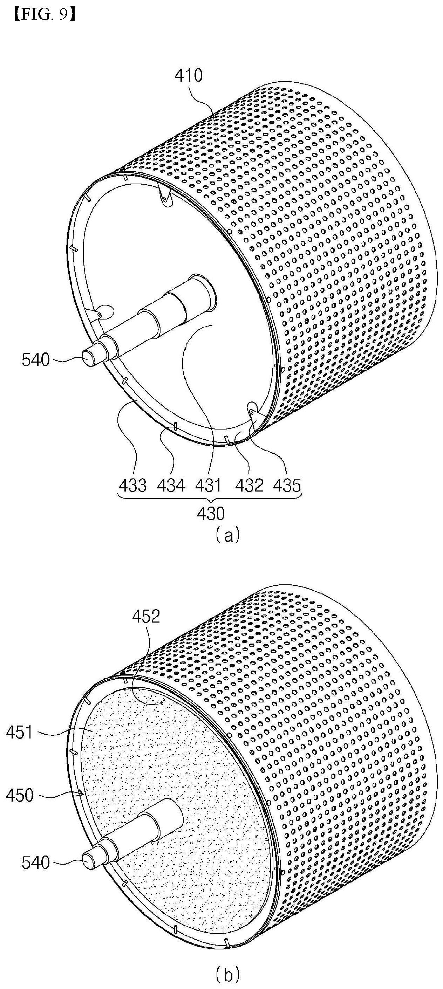

FIG. 9 shows the drum rear surface of the drum of the laundry treating apparatus of the present disclosure.

Referring to FIG. 9(a), the drum rear surface 430 may be connected to the driving unit 500 configured to rotate the drum 400.

The driving unit 500 may include a rotating shaft 540 for rotating the drum 400, and the rotating shaft 540 may be coupled to the center of the drum rear surface 430.

The drum rear surface 430 may be configured such that the center thereof is more deeply recessed than the edge thereof. Thus, even if the rotating shaft 540 is coupled to the center of the drum rear surface 430, the drum rear surface 430 may still maintain sufficient rigidity to support the rotating shaft 540.

The drum rear surface 430 may include a central portion 431 to which the rotating shaft 540 is coupled, a circumferential portion 432 provided on an outer circumferential surface of the central portion 431 to form an outer circumferential surface of the drum rear surface 430, a flange 433 extending from the circumferential portion 432 and coupled to the drum body 410, a balancer fastening portion 434 recessed into the circumferential portion 432 and coupled to the balancer 460, and a lifter fixing portion 435 which is provided on the circumferential portion 432 and to which the lifter 440 is fixed.

The central portion 431 may extend from the circumferential portion 432 to the rotating shaft 540 so as to be recessed.

The circumferential portion 432 may be provided as a ring-shaped plate, and may have a width enabling seating of the balancer 460.

The flange 433 may be bent from the circumferential portion 432 and may extend farther from the circumferential portion 432 in a rearward direction or a lateral direction. The flange 433 may be coupled to the drum body 410, and may increase the contact area between the drum body 410 and the drum rear surface 430.

The balancer fastening portion 434 may be recessed into or protrude from the circumferential portion 432 to form a space in which a fastening structure of the balancer 460 can be seated.

A fixing bolt 443 may pass through the lifter fixing portion 435 for coupling, and the lifter fixing portion may be shaped to come into surface contact with the other end of the lifter 440.

Referring to FIG. 9(b), since the main module 100 of the present disclosure is provided as a commercial laundry treating apparatus, a large amount of laundry or heavy laundry may be accommodated in the drum 400.

Therefore, the rotating shaft 540 may have a large diameter to transmit sufficient rotational force to the drum 400, and the drum rear surface 430 must be configured to withstand the rotational force transmitted from the rotating shaft 540.

The drum 400 may have a relatively large diameter to accommodate a large amount of laundry or heavy laundry, and therefore the diameter of the drum rear surface 430 may also be greater than the diameter of a drum used in a typical household dryer.

Even if the drum rear surface 430 is made of metal, it may be difficult to support the rotating shaft 540 and to withstand the rotational force transmitted from the rotating shaft 540.

In order to reinforce the rigidity of the drum rear surface 430 and to stably support the rotating shaft 540, the laundry treating apparatus of the present disclosure may further include a disc 450 coupled to the drum rear surface 430 to further support the rotating shaft 540.

The disc 450 may be formed in a circular shape, and may be provided at the center thereof with a hole through which the rotating shaft 540 passes and which is in surface contact with an outer circumferential surface of the rotating shaft 540.

An outer circumferential surface of the disc 450 may be coupled to the circumferential portion 432, and since the disc has a planar shape, the disc may be spaced apart from the central portion 431. Therefore, different parts of the rotating shaft 540 may be supported by the central portion 541 and the disc 450. One end of the rotating shaft 540 may be coupled to and supported by the central portion 451, and the part of the rotating shaft 540 between one end and the other end may be supported by the disc 450 in contact therewith.

Furthermore, the central portion 431 and the disc 450 may distribute and transmit the rotational force transmitted from the rotating shaft 540 to the drum rear surface 430.

The disc 450 may be made of a material with higher rigidity than the drum rear surface 430 or may be thicker than the drum rear surface. Consequently, the disc 450 may stably support the rotating shaft 540 while further reinforcing the rigidity of the drum rear surface 430.

The disc 450 may further include a disc body 451 coupled to the circumferential portion 431 to support the rotating shaft 540 and a disc through-hole 452 which communicates with the lifter fixing portion 435 and through which a fixing bolt 443 can pass.

The diameter of the disc body 451 may be less than the diameter of the circumferential portion 431.

The disc body 451 may be coupled to the circumferential portion 432 such that at least a part of the disc body is in surface contact with the circumferential portion. Alternatively, the disc body 451 may be coupled to the lifter 440 and the lifter fixing portion 435 via a fastening member when the lifter 440 is coupled to the drum rear surface 430.

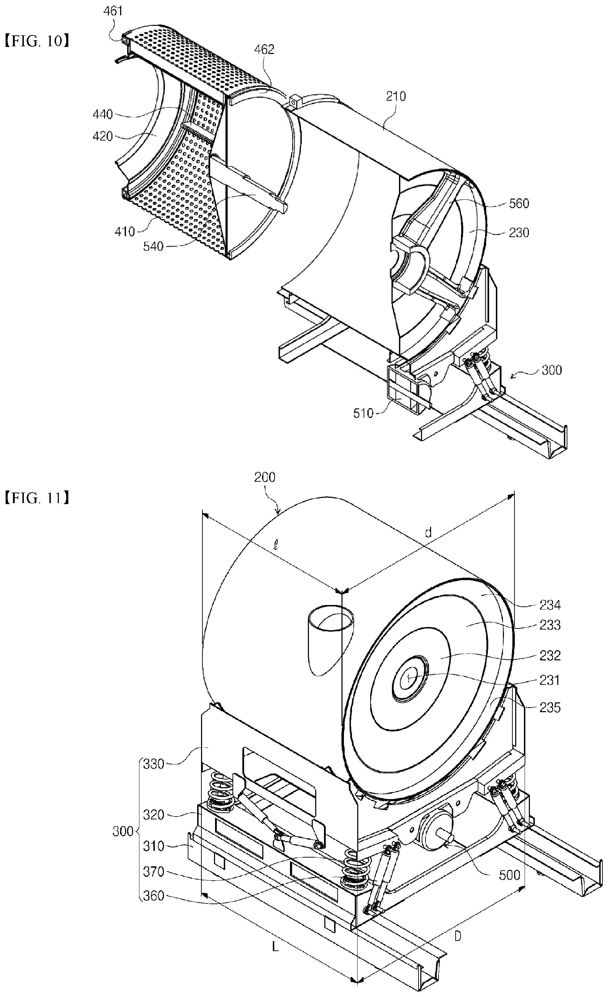

FIG. 10 shows the coupling structure between the drum and the tub of the laundry treating apparatus of the present disclosure.

The drum front surface 420 and the front balancer 461 may be coupled to each other on the front surface of the drum body 410, and the drum rear surface 430, the disc 450, and the rear balancer 462 may be coupled to each other on the rear surface of the drum body 410.

The rotating shaft 540 may be coupled to the drum rear surface 430 and the disc 450 and extend to the rear of the drum 400.

The length of the rotating shaft 540 may be greater than the diameter of the rotating shaft.

The drum 400 may be inserted into the tub 200 and assembled in the state in which the front body 220 is separated from the tub body 210 and the drum 400 is coupled to the rotating shaft 540.

With the tub 200 seated on the support 300, the drum 400 may be inserted into the tub 200 from the front to the back and assembled.

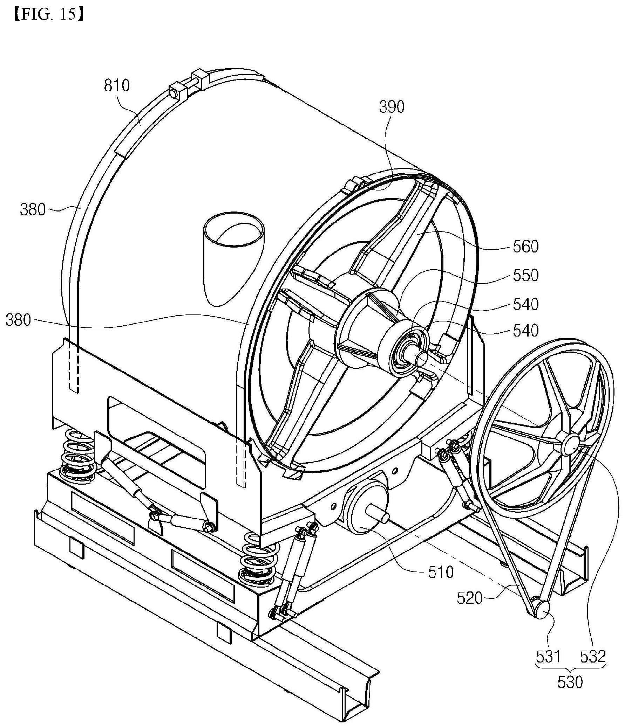

The driving unit 500 may include a motor 510 mounted on the support 300 to rotate the rotating shaft 540, a bearing 570 coupled to a rear body 230 of the tub 200 to rotatably support the rotating shaft 540, a bearing housing 550 that rotatably supports the bearing 570 and provides a space for installing the bearing 570, and a bearing support 560 that fixes the bearing housing 550 to the tub 200 (see FIG. 15).

The bearing support 560 may be coupled and fixed to a rear surface of the rear body 230 and may extend from the center of the central portion 431, to which the rotating shaft 540 is coupled, toward the flange 433. For example, the bearing support 560 may extend from the center of the tub 200, through which the rotating shaft 540 passes, to an inner circumferential surface of the rear body 230, and may be supported by the inner circumferential surface of the rear body 230. Thus, the bearing support 560 not only may support the load of the rotating shaft 540 and the bearing housing 550 but also may radially distribute external force transmitted from the rotating shaft 540 at the rear body 230. Furthermore, even if the rotating shaft 540 rotates the heavy drum 400 with high torque or repeatedly changes the direction of rotation, the bearing support 560 may stably support the rotating shaft 540 to prevent damage to the tub 200 or twisting of the rotating shaft 540 and the bearing housing 550.

FIG. 11 shows the rear of the tub of the laundry treating apparatus of the present disclosure.

The rear body 230 may include a shaft through-hole 231 through which the rotating shaft 540 passes and a mounting body 234 that forms an outer circumferential surface of a rear surface of the tub 200 or an outer circumferential surface of the rear body 230. The rear body 230 may include a seating body 232 extending from an outer circumferential surface of the shaft through-hole 231 toward the mounting body 234 and an extension body 233 extending from an outer circumferential surface of the seating body 232 toward the mounting body 234.

The seating body 232 may form a space in which the center of the bearing housing 550 is seated. The extension body 233 may extend obliquely from the outer circumferential surface of the seating body 232. For example, the extension body 233 may extend rearward from the outer circumferential surface of the seating body 232. Consequently, the seating body 232 and the shaft through-hole 231 may be recessed into the rear body 230, whereby sufficient rigidity to support the bearing support 560 may be ensured, and the volume of the tub 200 may be expanded by the extension body 233 protruding toward the outer circumferential surface of the rear body 230.

The mounting body 234 may be disposed along an outer circumferential surface of the extension body 233 in a ring shape and may be configured to support the other end of the bearing support 560.

The rear body 230 may further include a support body 235 that is bent rearward from the mounting body 234 and further extends or that is coupled to an outer circumferential surface of the mounting body 234 and extends rearward. The support body 235 may provide an area in the other end of the bearing support 560 can be mounted.

The support 300 may be configured to support the tub 200.

The support 300 may include a base 310 supported by the ground, an elastic portion 370 that absorbs the vibration of the tub 200 while supporting the load of the tub 200, and a damper portion 360 that damps the vibration generated by the tub 200.

However, since the laundry treating apparatus of the present disclosure is provided as a commercial laundry treating apparatus, the diameter and volume of the tub 200 may be very large, and the energy and direction of vibration generated by the tub 200 may vary widely. Therefore, directly supporting the tub 200 using the elastic portion 370 and the damper portion 360 may be unstable.

For this reason, the support 300 of the laundry treating apparatus of the present disclosure may further include an upper support frame 330 on which the tub 200 is seated and which is supported by the elastic portion 370 and the damper portion 360.

The length L of the upper support frame 330 may be equal to or greater than the length l of the tub 200, and the width D of the upper support frame 330 may be equal to or less than the width d of the tub 200. The width d of the upper support frame 330 may be greater than half the total diameter d of the tub 200. Consequently, the upper support frame 330 may provide an area capable of receiving and supporting at least a part of the tub 200.

An upper surface of the upper support frame 330 may be formed in a shape corresponding to the shape of a lower curved surface of the tub 200, and the tub 200 may be seated on and supported by the upper support frame 330. Consequently, the upper support frame 330 may support the tub 200 while preventing separation of the tub 200 in a radial direction.

The damper portion 360 may damp vibration transmitted to the upper support frame 330. The elastic portion 370 may absorb vibration transmitted to the upper support frame 330. The damper portion 360 and the elastic portion 370 may be coupled to a lower part of the upper support frame 330 to absorb and damp the vibration of the tub 200 while absorbing and damping the vibration transmitted to the upper support frame 330.

The support 300 may further include a lower support frame 320 that stably transmits the vibration and load transmitted from the damper portion 360 and the elastic portion 370 to the base 310 and provides a structure in which the damper portion 360 and the elastic portion 370 can be stably installed.

The lower support frame 320 may be disposed lower than the upper support frame 330, thereby providing a space where the damper portion 360 and the elastic portion 370 can be mounted. The lower support frame 320 may be spaced apart from the upper support frame 330. The elastic portion 370 may be disposed between the lower support frame 320 and the upper support frame 330. The damper portion 360 may connect the lower support frame 320 and the upper support frame 330 to each other.

The lower support frame 320 may be seated and disposed on the base 310.

Since the damper portion 360 and the elastic portion 370 are installed on the lower support frame 320 and a part of the lower support frame 320 extends in a width direction, the base 310 may be freely designed in shape.

For example, the base 310 may include a plurality of base bodies 312 each of which has a U-shaped section and extends in the front-to-back direction and which is disposed on the left and right sides and legs 311 coupled to lower surfaces of the base bodies 312 to support the main module 100.

As a result, the base 310 may stably support the main module 100 despite the small size thereof, and a space into which a mounting bracket of transport equipment for transporting the laundry treatment apparatus can be inserted may be provided in the base 310.

The driving unit 500 may be seated on any one of the upper support frame 330 and the lower support frame 320.

For example, the motor 510 of the driving unit 500 may be seated on the upper support frame 330. The driving unit 500 may function as a load portion that applies an additional load to the upper support frame 330. Consequently, the weight of the structure on the damper portion 360 and the elastic portion 370 may increase, whereby the vibration amplitude of the tub 200 and the upper support frame 330 may be reduced.

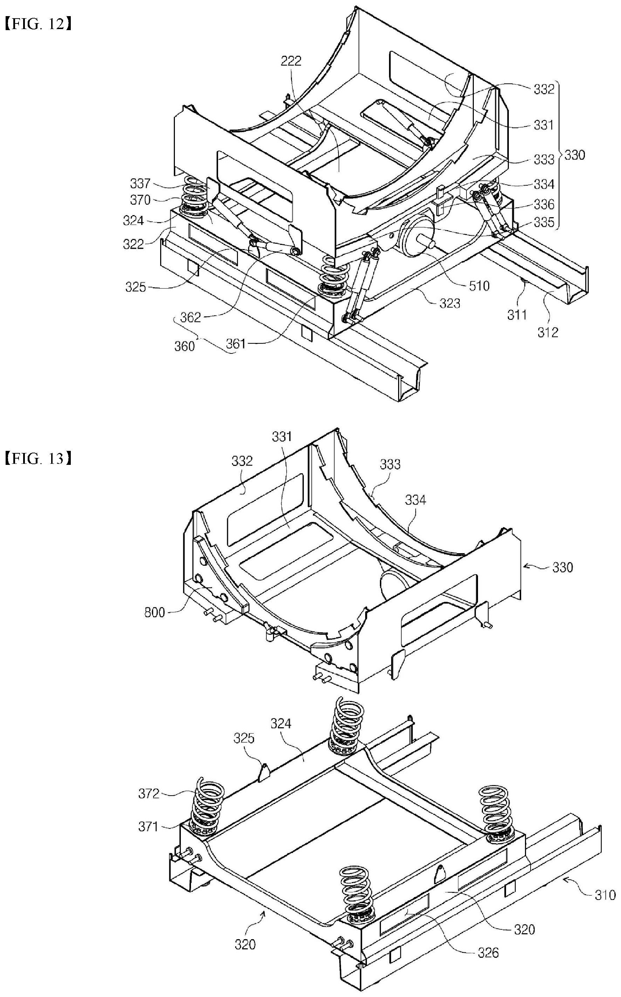

FIG. 12 shows the structure of the support of the laundry treating apparatus of the present disclosure.

The upper support frame 330 may include a seating plate 331 that can be supported by the elastic portion 370.

The seating plate 331 may be configured to transmit the load transmitted from the tub 200 to the elastic portion 370.

The elastic portion 370 may be provided in plural to stably support the tub 200. The elastic portions 370 may be spaced apart from each other in the width direction so as to support both sides of the tub 200. Furthermore, the elastic portions 370 may be spaced apart from each other in a longitudinal direction so as to stably support the front and rear of the tub 200.

The seating plate 331 may be provided as a single plate and may be configured to be seated on all of the plurality of elastic portions 370.

Alternatively, as shown, in order to reduce the weight of the seating plate 331 and to ensure the durability of the seating plate 331, the seating plate 331 may be provided in plural so as to be disposed spaced apart from each other.

The plurality of seating plates 331 may be spaced apart from each other so as to be disposed on the left side and the right side of the tub, respectively, and the elastic portion 370 disposed on the left side may support the seating plate 331 disposed on the left side while the elastic portion 370 disposed on the right side may support the seating plate 331 disposed on the right side.

The upper support frame 330 may include a support plate 333 disposed on the seating plate 331 to support the tub 200 in line contact or surface contact therewith.

The support plate 333 may be configured to support the lower part of the tub 200. The tub 200 may be seated on the support plate 333.

An upper surface of the support plate 333 may have a curvature corresponding to the curvature of the tub body 210 such that the tub 200 seated on the support plate is not separated from the support plate due to the vibration of the tub 200. Consequently, a lower part of the tub body 210 may be at least partially provided in an upper part of the support plate 333, and the support plate 333 may support not only the lowermost end of the tub body 210 but also at least a part of a lower surface of the tub body 210 extending left and right from the lowermost end of the tub body.

The middle of the upper part of the support plate 333 may be disposed at the lowest point, and both ends of the upper part of the support plate may be formed at the highest point. Thus, the support plate 333 may stably support the tub 210 in the width direction.

The support plate 333 may be formed in a plate shape extending from the seating plate 331 in the width direction. The support plate 333 may be provided in plural so as to be spaced apart from each other in the longitudinal direction of the tub body 210 or the longitudinal direction of the seating plate 331 to support the tub body 210 at the front and rear thereof, respectively.

Consequently, even if the thickness of the support plate 333 is small, the tub body 210 may be stably supported in the front-to-back direction.

The support plates 333 may be seated on the seating plate 331 in the state in which the number of support plates at the front and the number of support plates at the rear are different from each other. For example, the support plates 333 may be disposed in greater number at the rear than at the front. Thus, the support plates 333 may stably support the load of the driving unit 500, such as the bearing housing 550 coupled to the rear of the tub 200.

The upper support frame 330 may include an extension plate 332 that extends upward from the outermost side of the seating plate 331 to support both ends of the support plate 333.

The extension plate 332 may extend upward from an outer surface of the seating plate 331. If the seating plate 331 is provided in plural, the extension plate 332 may also be provided in number corresponding to the number of seating plates 331.

The extension plate 332 may support both ends of the support plate 333 seated on the seating plate 331 to prevent the support plate 333 from being separated to the left or right or from being deformed. Furthermore, if the support plate 333 is provided in plural, the plurality of support plates 333 may be arranged so as not to be twisted in the front-to-back direction. Consequently, when the tub body 210 is seated on the support plates 333, twisting of the support plates 333 may be prevented.

The extension plate 332 may be integrally formed with the seating plate 331 and bent upward from the seating plate 331.

The lower support frame 320 may include an installation frame 324 disposed lower than the upper support frame 330
to support a lower end of the elastic portion 370.

The installation frame 324 may be configured to support all the elastic portions 370.

Alternatively, as shown, in order to reduce the manufacturing cost of the installation frame 324 and to ensure the durability of the installation frame 324, the installation frame 324 may be provided in plural.

For example, the installation frames 324 may be spaced apart from each other so as to be disposed on the left side and the right side of the tub, respectively, and the elastic portion 370 disposed on the left side may be supported by the installation frame 324 disposed on the left side while the elastic portion 370 disposed on the right side may be supported by the installation frame 324 disposed on the right side.

The installation frame 324 may be disposed so as to face the seating plate 331. The length of the installation frame 324 may correspond to the length of the seating plate 331.

Since the load of the upper support frame 330 and the tub 200 is supported by the installation frame 324, rather than the seating plate 331, the width of the installation frame 324 may be less than the width of the seating plate 331 to ensure durability and rigidity of the installation frame.

The lower support frame 320 may further include an extension frame 322 that extends downward from one surface of the installation frame 324 and is supported by the base 310 such that the installation frame 324 is spaced apart upward from the base 310.

Due to the extension frame 322, the installation frame 324 may be disposed higher than the base 310. As a result, excessive elongation of the elastic portion 370 may be prevented, allowing the elastic portion 370 to support the load of the upper support frame 330 and the tub 200 with higher rigidity and elasticity.

The extension frame 332 may be disposed parallel to an outer surface of the base body 312 or disposed farther outward.

The lower support frame 320 may further include a transport plate 321 extending from the extension frame 322 and resting on the base 310 in the width direction. The transport plate 321 may serve to stably support the extension frame 322.

The transport plate 321 may have a width equal to or greater than the width of the base body 312. Consequently, the transport plate 321 may not only be stably supported by the base body 312 but also provide an area supported by a mounting bracket of a transport means inserted between the plurality of base bodies 312.

The lower support frame 320 may further include a connection frame 323 that connects at least one of the installation frames 324, the extension frames 322, and the transport plates 321, which are disposed on both sides while being spaced apart from each other, in the width direction.

The connection frame 323 may be coupled to at least one of front and rear ends of the installation frame 324, the extension frame 322, and the transport plate 321 to reinforce the rigidity of the lower support frame 320.

The connection frame 323 may be disposed at each of the front and rear ends of the installation frame 324, the extension frame 322, and the transport plate 321, and may extend in the width direction.

A side surface of the connection frame 323 may be disposed so as to face front and rear surfaces of the extension frame 322, and a lower surface of the connection frame 323 may be disposed so as to face one of front and rear surfaces of the transport plate 321.

Both ends of the connection frame 323 may have a thickness greater than the thickness of the middle of the connection frame.

The damper portion 360 may be coupled to the lower support frame 320 and fixed to the upper support frame 330.

The damper portion 360 may include at least one of a support damper 361 that supports front and rear sides of the tub 200 and an absorbing damper 362 that damps the vibration of the tub 200 in the front-to-back direction.

The support damper 361 may be provided in plural and may be disposed at the front and rear of the lower support frame 320 and the upper support frame 330, respectively.

One end of the support damper 361 may be coupled to the front or rear of the lower support frame 320 and coupled to the front or rear of the upper support frame 330 to support the load of the tub 200 and damp vibration of the tub.

One end of the support damper 361 may be coupled to both sides of the connection frame 323, and the other end of the support damper may be coupled to the seating plate 331. Thus, the vibration of the tub 200 may be distributed to both sides and effectively damped.

The support damper 361 may be installed in two or more on one side of the connection frame 323 and in two or more on the other side of the connection frame.

The upper support frame 330 may further include a damper support 335 which is coupled to or extends from front and rear surfaces of the seating plate 331 and to which an upper end of the support damper 361 can be coupled.

The lower support frame 320 may further include a damper installation portion 325 which is disposed above the installation frame 324 and to which one end of the absorbing damper 362 can be coupled.

The damper installation portion 325 may be disposed spaced apart from both ends of the installation frame 324. Thus, it is possible to prevent the damper installation portion from interfering with the elastic portion 370.

The damper installation portion 325 may be disposed at a central region of the installation frame 324. The damper installation portion 325 may be coupled and fixed to the installation frame 324, or may be formed as the result of a part of the installation frame 324 being cut upward.

One end of the absorbing damper 362 may be coupled to the damper installation portion 325, and the other end of the absorbing damper may be coupled to the extension plate 322.

The absorbing damper 362 may be provided in plural. Thus, one end of each of the absorbing dampers 362 may be coupled to the damper installation portion 325, but the other end of one absorbing damper 362 may be disposed farther rearward than the other end of another absorbing damper 362.

That is, lower ends of the plurality of absorbing dampers 362 may be all fixed to the damper installation portion 325, but upper ends of the absorbing dampers may be disposed on the front and rear so as to be spaced apart from each other. Since the plurality of absorbing dampers 362 is disposed at an angle toward the front and rear relative to the damper installation portion 325, the vibrations of the tub 200 in the front-to-back direction may be effectively damped.

The motor 510 may be coupled and fixed to the upper support frame 330. The upper support frame 330 may further include a motor support 334 that connects the plurality of seating plates 331 and supports the motor 510.

The motor support 334 may be coupled to both ends of the plurality of seating plates 331 spaced apart from each other on both sides. Consequently, the rigidity of the upper support frame 330 may be reinforced, and an area in which the motor 510 can be mounted may be provided.

The motor support 334 may be connected to the seating plate 331 and extend downward. Consequently, the motor 510 may be disposed lower than the seating plate 331, whereby interference with components such as the tub 200 may be prevented.

FIG. 13 shows the detailed structure of the support of the laundry treating apparatus of the present disclosure.

The elastic portion 370 may include a spring 372 that supports the load of the tub 200 and absorbs the vibration of the tub 200 and a spring holder 371 that connects upper and lower ends of the spring to the support 300.

The spring holder 371 may be disposed at the front and rear of both sides of the lower support frame 320. Furthermore, the spring holder 371 may be disposed at the front and rear of both sides of the upper support frame 330.

The lower support frame 320 may further include a support hole 326 formed through the extension frame 322. The support hole 326 may be provided in plural so as to be spaced apart from each other along the length of the extension frame 322 in the front-to-back direction. This may further enhance the rigidity of the extension frame 322.

The load portion 800 may be seated on the upper support frame 330. Consequently, the weight supported by the elastic portion 370 and the damper portion 360 may be further increased, thereby significantly reducing the vibration amount or amplitude of the tub 200.

The load portion 800 may be coupled and fixed to the support plate 333.

Meanwhile, the support plate 333 may be disposed at a distance inward from front and rear ends of the seating plate 331. Consequently, a space in which the load portion 800 can be installed may be provided between the front and rear ends of the support plate 333 and the front and rear ends of the seating plate 331.

The load portion 800 may be supported by the seating plate 331 and the extension plate 332.

The load portion 800 may be provided in plural and coupled to each of both ends of the support plate 333. Consequently, the load portion 800 may have a sufficiently large area, whereby the load portion 800 may have a sufficient weight, and load may be effectively applied to the elastic portion 370 and the damper portion 360 disposed at both ends of the support plate 333.

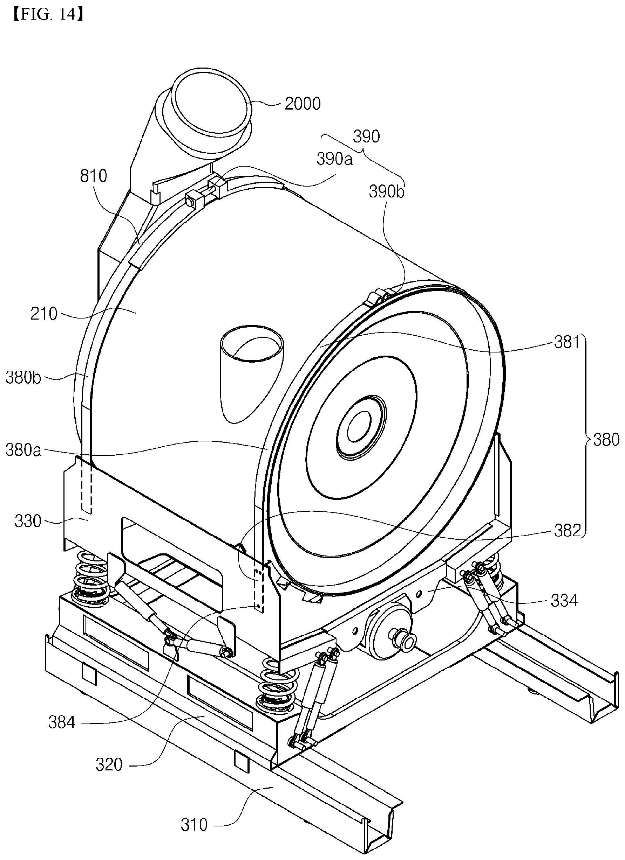

FIG. 14 shows the coupling structure between the tub and the support of the laundry treating apparatus of the present disclosure.

The tub 200 may be seated on the upper support frame 330 and supported in the cabinet 110.

However, when strong vibration occurs in the drum 400 or the main module 100 is tilted during transportation, it is necessary for the tub 200 to be stably fixed to the upper support frame 330.

Therefore, the support 300 may further include a strap 380 capable of securely fixing the tub 200 to the upper support frame 330.

The strap 380 may be configured to press the upper part of tub 200 against the upper support frame 330.

For example, the strap 380 may be formed in the shape of a string that is in tight contact with the outer circumferential surface of the tub body 210 exposed outside the upper support frame 330, has the other end fixed to the upper support frame 330, and has a length greater than a width.

The strap 380 may be made of metal to securely fix the tub 200 to the upper support frame 330.

The strap 380 may include a bent portion 381 that is disposed along the outer circumferential surface of the tub body 210 to wrap around the outer circumferential surface of the tub body 210 and a coupling surface 382 provided at the other end of the bent portion 381 for coupling to the upper support frame 300.

The strap 380 may be provided as a single member and coupled to the upper support frame 330 while wrapping around an upper part of the outer circumferential surface of the tub body 210.

However, the tensile strength of the strap 380 may vary depending on temperature and material. Therefore, to adjust the tension that presses the tub body 210 against the upper support frame 330, the strap may be provided in plural and disposed on the left and right sides of the tub body 210, respectively.

Specifically, the coupling surfaces 382 of the straps 380 may be coupled to both sides of the upper support frame 330, and the bent portions 381 may extend upward along the outer circumferential surface of the tub body 210 such that the other ends thereof face each other.

The upper support frame 330 may further include a strap coupling portion 390 that couples the plurality of straps 380 to each other.

The strap coupling portion 390 may adjust the force with which the plurality of straps 380 press the tub body 210 while adjusting the distance between the opposing bent portions 381.

The strap 380 may be configured to fix the front and rear of the tub body 210 to the upper support frame 330.

For example, the straps 380 may include a front strap 380a that fixes the tub body 210 to the upper support frame 330 and a rear strap 380b that is disposed farther rearward than the front strap 380a and is fixed to the upper support frame 330.

The front strap 380a and the rear strap 380b may have the same thickness, length, and material, or may have different thicknesses, lengths, and materials. However, each of the front strap 380a and the rear strap 380b may include a bent portion 381 that wraps around the tub body 210 and a coupling surface 382 that extends from the bent portion 381 to both sides of the upper support frame 330 to fix the bent portion 381.

The front strap 380a may be disposed offset toward the front end of the tub body 210, and the rear strap 380b may be disposed offset toward the rear end of the tub body 210. Thus, the tub body 210 may be prevented from becoming spaced apart or separated from the upper support frame 330 from front to rear.

The front strap 380a may be disposed spaced apart rearward from the front end of the tub body 210, and may be disposed at the position at which the front strap faces the elastic portion 370 vertically.

The rear strap 380b may be disposed spaced apart downward from the rear end of the tub body 210, and may be disposed at the position at which the rear strap faces the elastic portion 370 vertically.

The strap 380 may further include a strap fastening member 385 for fixing the coupling surface 382 to the upper support frame 330.

The strap fastening member 385 may be provided as a bolt or the like to fix the coupling surface 382 to the extension plate 332 of the upper support frame 330.

Meanwhile, the strap coupling portion may include a front strap coupling portion 390a that adjusts the distance between the bent portions 381 of the front strap 380a and a rear strap coupling portion 390b that adjusts the distance between the bent portions 381 of the rear strap 380b.

The load portion 800 may include an upper load portion 810 that directly applies a load to the tub body 210.

The upper load portion 810 is configured to apply a load to a front upper part of the tub body 210 so as to reduce the amplitude of vibration of the front of the tub body 210.

The upper load portion 810 may be coupled to the strap 380.

The upper load portion 810 may be seated and disposed on the front strap 380a. Thus, when the driving unit 500 is supported at the rear of the tub body 210, the front of the tub body 210 may be prevented from being lifted upward, or the front of the tub body 210 may be prevented from vibrating relative to the driving unit 500.

FIG. 15 shows the driving unit of the laundry treating apparatus of the present disclosure.

The driving unit 500 may include a motor portion 510 that provides power necessary to rotate the rotating shaft 540, a belt 520 that transmits power from the motor portion 510, a pulley 530 rotated by the belt 520, a rotating shaft 540 coupled to the pulley 530 to rotate the drum 400, a bearing 570 that rotatably supports the rotating shaft 540, a bearing housing 550 coupled to the tub 200 to receive the bearing 570 and support the rotating shaft 540 , and a bearing support 560 that fixes the bearing housing 560 to the tub 200.

The motor portion 510 may be disposed behind the upper support frame 330 and may be fixed to the lower part of the upper support frame 330. Thus, the motor portion 510 may also serve as a load portion that applies an additional load to the tub 200.

The pulley 530 may include a power pulley 531 coupled to a driving shaft of the motor portion 510 and a rotating pulley 532 coupled to the rotating shaft 540.

The rotating pulley 532 may have a larger diameter than the power pulley 531. Therefore, even if the motor portion 510 rotates at a very high rpm to provide high output, the rotating pulley 532 may be decelerated to an appropriate rpm lower than the high rpm to stably rotate the drum 400.

The belt 520 may be configured to wrap around outer circumferential surfaces of the power pulley 531 and the rotating pulley 532 so as to rotate the rotating pulley 532 in accordance with the rotation of the power pulley 531.

One end of the rotating shaft 540 may be coupled to the rear surface of the drum 400, and the other end of the rotating shaft may be coupled to the center of the rotating pulley 532. The rotating shaft 540 may rotate simultaneously with the rotating pulley 532.

The bearing 570 may be configured such that, when an inner circumferential surface of the bearing is rotated in a state of being coupled to an inner circumferential surface of the rotating shaft 540, an outer circumferential surface of the bearing remains stationary. Thus, the outer circumferential surface of the bearing 570 may be coupled to the tub 200 to support the rotating shaft 540 to the tub 200.

The bearing 570 may be directly coupled to the shaft through-hole 231 of the rear body 230.

However, the bearing housing 550 may provide a space for installing the bearing 570, and the bearing support 560 may fix and support the bearing housing 550 at the rear of the tub 200 to directly support or distribute external force or vibration.

As a result, damage to the tub 200 caused by the load or vibration of the drum 400 transmitted through the bearing 570 or by the output of the driving unit 500 may be prevented.

The bearing support 560 may extend from the center of the rear body 230 to the inner circumferential surface of the tub body 210 to radially distribute external force transmitted from the bearing 570 and to prevent changes in position of the bearing 570.

The driving unit 500 may include a plurality of bearings 570 to stably support the rotating shaft 540. The bearing housing 550 may be configured to seat the plurality of bearings 570 on the bearing support 560.

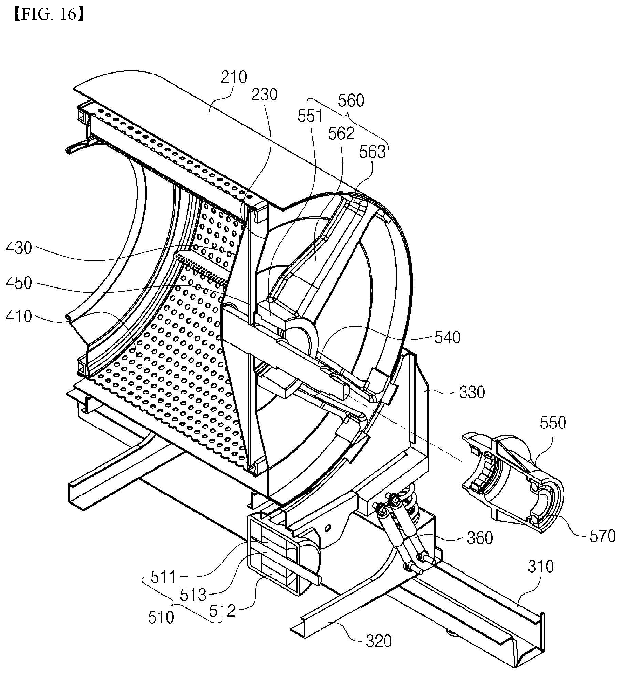

FIG. 16 shows a detailed embodiment of the driving unit of the laundry treating apparatus of the present disclosure.

The motor portion 510 may be provided as an inner rotor type motor. Consequently, the motor portion 510 may have a relatively reduced diameter and volume, thereby allowing the volume of the tub 200 to be increased.

The motor portion 510 may include a stator 511 that generates a rotating magnetic field, a rotor 512 rotated by the stator 511, and a driving shaft 513 that is rotated with the rotor 512 to rotate the power pulley 531.

The bearing support 560 may include a housing installation hole 561 that is disposed at the center of the rear body 230 to receive the rotating shaft 540 and supports the bearing 570 or the bearing housing 550, a spider 562 extending radially from the housing installation hole 561, and an end portion 563 that is provided at the other end of the spider 562 and is coupled to the inner circumferential surface of the rear body 230.

The end portion 563 may form the other end of the spider 562.

Alternatively, the end portion 563 may extend from the other end of the spider 562 to both sides, whereby the end portion may have a thickness greater than the thickness of the spider 562.

The housing installation hole 561 may be formed in a ring shape and may have a thickness sufficient for the bearing 570 to be installed therein.

The spider 562 may be provided in plural, and may extend from the housing installation hole 561 to the support body 235. A front surface of the spider 562 may correspond in shape to the rear body 230 so as to be in surface contact with the rear body 230.

The end portion 563 may be coupled to and fixed to the support body 235. The radial thickness of the end portion 563 may be greater than the radial thickness of the spider 562. Consequently, coupling between the end portion 563 and the rear body 230 may be increased while an area in which fastening member can be coupled is provided.

A large amount of laundry, such as a plurality of bedclothes, may be loaded into the drum 400, and the rotating shaft 540 must rotate the drum 400 while stably supporting the drum 400 in the tub 200. To this end, the rotating shaft 540 may have a very large thickness.

However, it is necessary for the rotating shaft 540 to have a sufficient length so as to extend from the drum rear surface 430 through the rear body 230 and the bearing housing 550 and to be connected to the rotating pulley 532.

In this case, if the rotating shaft 540 is even slightly misaligned, the drum 400 may become misaligned in the tub 200, whereby the drum may be rotated eccentrically or collide with the tub 200, and the rotating pulley 532 and the power pulley 531 may be misaligned, whereby the belt 520 may be separated.

To prevent this, in the laundry treating apparatus of the present disclosure, the bearing 570 that supports the rotating shaft 540 may be provided in plural such that the rotating shaft 540 can be supported on at least two points in the axial direction. Thus, the rotating shaft 540 may be axially supported at two points by the bearings 570, whereby twisting of the rotating shaft may be prevented.

To this end, one of the bearings 570 may be mounted directly in the housing installation hole 561 or on the rear body 230 to support the rotating shaft 540. The additional bearing 570 must be spaced farther axially or rearward than the bearing 570 mounted in the housing installation hole 561 to effectively prevent twisting of the rotating shaft 540.

However, there may not be sufficient space in the housing installation hole 561 to install two bearings 570, and increasing the thickness to allow the two bearings 570 to be spaced apart from each other by a sufficient distance may be inefficient.

To address this, the bearing housing 550 of the laundry treating apparatus of the present disclosure may be configured to provide a space for the additional bearing to be installed behind the bearing support 560.

The bearing housing 550 may be formed in a cylindrical shape installed in the housing installation hole 561 and extending rearward from the housing installation hole 561 in the axial direction.

The bearing housing 550 may be configured such that the length thereof exposed outside the housing installation hole 561 is greater than the length thereof inserted into the housing installation hole 561. Consequently, the bearing 570 may stably support the rotating shaft 570 in an area located farther rearward than the housing installation hole 561.

The bearing housing 550 may extend to an area facing the front of the rotating pulley 532.

For example, the bearing housing 550 may be provided at one end thereof with a space in which the bearing 570 can be installed in the housing installation hole 561, and may be provided at the other end thereof with a space in which the bearing 570 can be installed outside the housing installation hole 561.

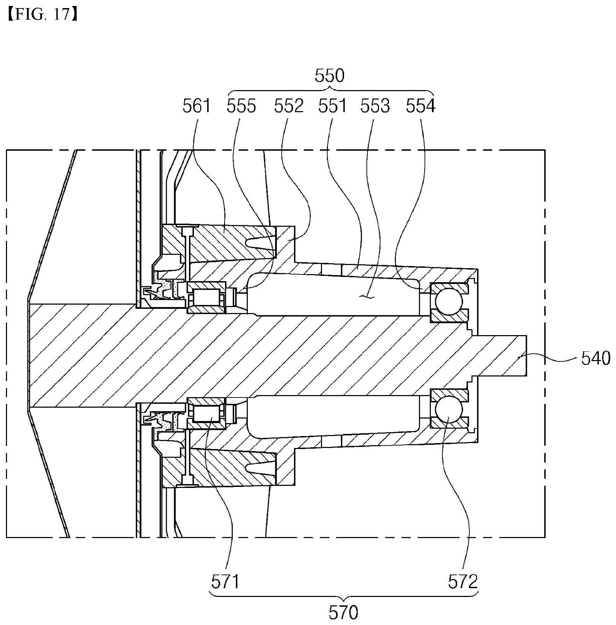

FIG. 17 shows the structure of the bearing housing 550.

The bearing housing 550 may include a cylindrical installation body 551 that is inserted into the housing installation hole 561 and extends rearward in the axial direction and a fixing body 552 that protrudes from an outer circumferential surface of the installation body 551 and can be fixed to the housing installation hole 561.

The installation body 551 may be configured such that the length thereof extending rearward from the fixing body 552 along the rotating shaft 540 is greater than the length there of extending from the fixing body 552 toward the housing installation hole 561 or the drum 400. That is, the fixing body 552 may be disposed offset farther forward than the center of the installation body 551.

The bearing housing 550 may include a front body 555 which protrudes from an inner circumferential surface of the installation body 551 and on which a first bearing 571 that supports the rotating shaft 540 in the housing installation hole 561 is seated and a rear body 554 which protrudes from the inner circumferential surface of the installation body 551 and on which a second bearing 572 that supports the rotating shaft 540 outside the housing installation hole 561 is seated.

The front body 556 and the rear body 554 may be configured to prevent the first bearing 571 and the second bearing 572 from moving toward the center of the installation body 561, and may be spaced apart from front and rear ends of the installation body 551 toward the center by a distance equal to or greater than the thickness of the first bearing 571 and the second bearing 572.

The first bearing 571 may be disposed in the front end of the installation body 551, and the second bearing 572 may be disposed in the rear end of the installation body 551. Thus, the first bearing 571 and the second bearing 572 may support the rotating shaft 540 at the points farthest from the installation body 551.

Of course, to stably support the rotating shaft 540, the bearing 570 may further include an additional bearing, and the additional bearing may be disposed between the first bearing 571 and the second bearing 572 in the installation body 551.

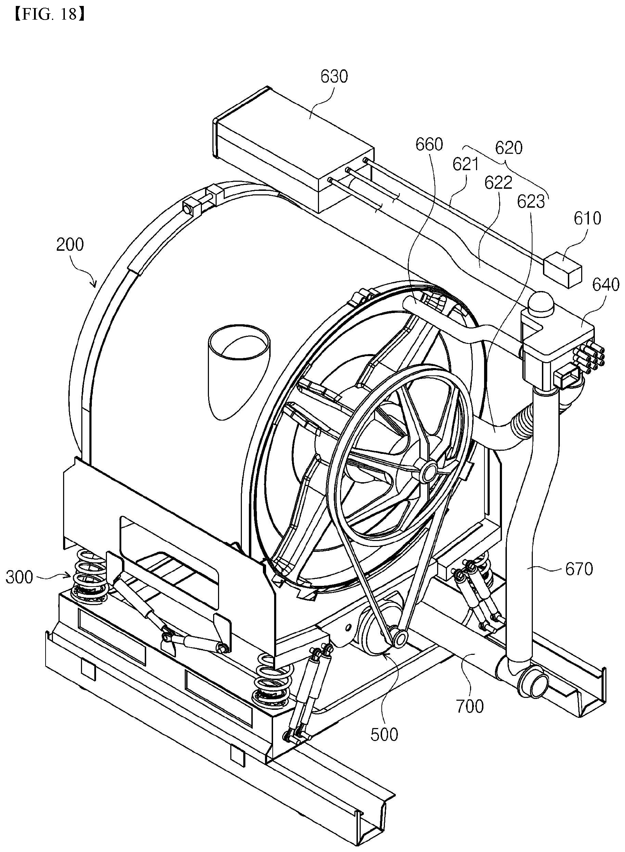

FIG. 18 shows a water supply unit of the laundry treating apparatus of the present disclosure.

The water supply unit 600 may include a water supply valve 610 fixed to the rear panel 114 or the like to receive water from an external water source; a water supply pipe 620 that conveys water supplied from the water supply valve 610; and a detergent box 630 that is coupled to the water supply pipe 620 to receive water from the water supply pipe 620 and guide detergent into the tub 200.

The water supply pipe 620 may include a first water supply pipe 620 that guides water from the water supply valve 610 to the detergent box 630, and a second water supply pipe 630 that guides water and detergent from the detergent box 630 to the tub 200.

Meanwhile, the laundry treating apparatus of the present disclosure may be provided as a commercial laundry treating apparatus, requiring a large amount of water to treat a large amount of laundry. Therefore, the water supply valve 610, the detergent box 630, and the water supply pipe 620 may be configured to supply a large amount of water. In addition, the external water source may be designed to supply a sufficient flow rate to the water supply valve 610, the detergent box 630, and the water supply pipe 620. However, if water supplied from the external water source has a high flow rate or high pressure, the water may exceed the capacity of the water supply valve 610, the detergent box 630, and the water supply pipe 620, or an amount of water exceeding the capacity of the tub 200 may be supplied, causing backflow.

To prevent this, the water supply unit 600 of the laundry treating apparatus of the present disclosure may include a communication case 640 capable of temporarily storing or accommodating water supplied through the second water supply pipe 622 before the water is supplied to the tub 200.

The communication case 640 may be configured to temporarily accommodate a certain amount of water and may communicate with the drain unit 700, which will be described later, such that excessively supplied or backflowing water is immediately discharged to the drain unit 700.

The communication case 640 may further include a bypass pipe 640 extending from a lower part thereof to convey water to the drain unit 700.

Air may remain in the communication case 640 because water can be discharged to the drain unit 700 even when a large amount of water is supplied thereto. Therefore, the water supply unit 600 may further include a communication pipe 660 that connects the interior of the tub 200 to the communication case 640. The communication pipe 660 may be coupled to the rear body 230 at a position higher than a full water level and extend to the communication case 640.

Consequently, air may be constantly supplied into the tub 200 through the communication case 640, thereby preventing the interior of the tub 200 from becoming sealed.

Meanwhile, the communication case 640 may be configured to receive additional water from the external water source or the water supply valve 610. Consequently, the water supply unit 600 may rapidly supply water to the tub 200 through the communication case 640 without passing through the detergent box 630.

The water supply unit 600 may include a third water supply pipe 623 extending from a lower part of the communication case 640 to supply water to the tub 200. The third water supply pipe 623 may have a larger diameter than the first water supply pipe 621 and the second water supply pipe 622 so as to supply a large amount of water.

The communication case 640 may be configured such that the part communicating with the third water supply pipe 623 and the part communicating with the bypass pipe 660 are divided from each other. For example, the communication case 640 may include a partition wall formed on an inner lower surface thereof so as to be disposed between the third water supply pipe 623 and the bypass pipe 660 while being spaced apart from an upper surface of the communication case 640.

Consequently, only water that is not directly discharged to the third water supply pipe 623 and flows over the partition wall, among the water supplied from the water supply valve 610, may be discharged to the drain unit 700.

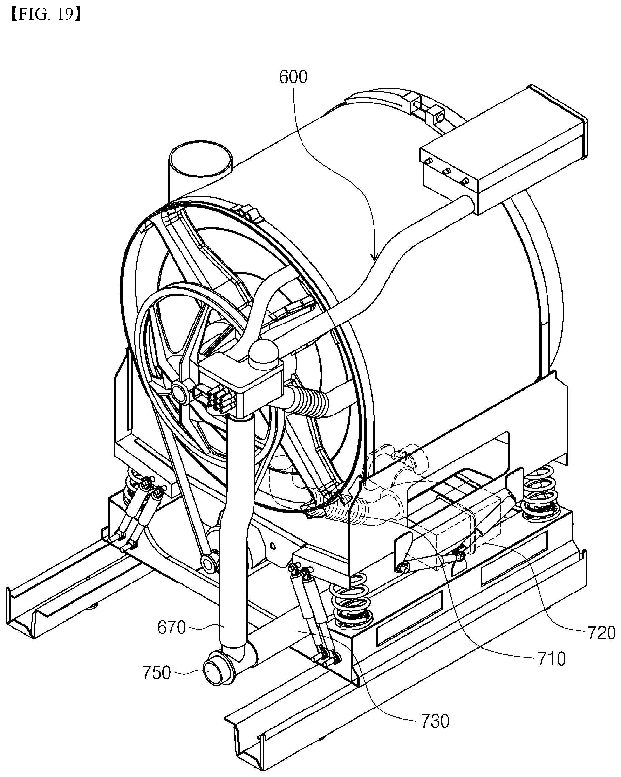

FIG. 19 shows the drain unit of the laundry treating apparatus of the present disclosure.

The drain unit 700 may include a drain pipe 710 that communicates with the lower part of the tub body 210 to drain water, and a drain valve 720 for selectively opening and closing the drain pipe 710, and a discharge pipe 730 coupled to the drain valve 720 to guide water passing through the drain valve 720 to the outside of the cabinet 100.

The drain valve 720 may be seated on the lower support frame 320, and the drain pipe 710 may extend from a lower part of the outer circumferential surface of the tub body 210 to the drain valve 720.

The drain valve 720 may be replaced by a pump that discharges water in the tub 200 to the outside.

The drain valve 720 may be disposed closer to the front than to the rear of the tub 200. The drain valve 720 may be located on a rear surface of the cover panel 112. Thus, the drain valve 720 may be easily maintained even if other appliances are disposed on both sides of the cabinet 100.

The drain pipe 730 may extend toward the rear panel 114 with one end connected to the drain valve 720.

The other end of the drain pipe 730 may be disposed lower than one end of the drain pipe.

The drain unit 700 may include a connecting pipe 750 that allows the drain valve 730 and the bypass pipe 650 to communicate with each other therethrough.

The connecting pipe 750 may be coupled to the other end of the drain pipe 730 and the other end of the bypass pipe 650 to discharge water supplied from the drain pipe 730 and the bypass pipe 650 to the outside of the cabinet 100.

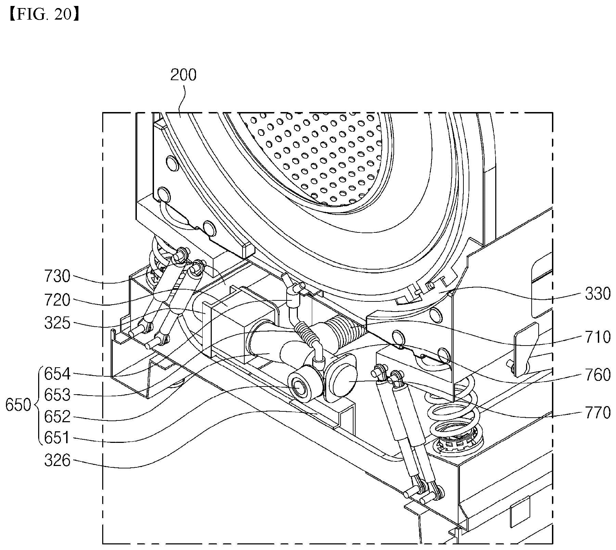

FIG. 20 shows the relationship between the drain unit and a circulation unit of the laundry treating apparatus of the present disclosure.

The main module 100 of the present disclosure may further include a circulation unit 650 that circulates water discharged to the drain unit 700 back into the tub 200.

The circulation unit 650 may be configured to resupply detergent or water accumulated on the bottom of the tub 200 to a high water level in the tub 200 to enhance washing performance.

The circulation unit 650 may include a circulation pump 651 that provides power necessary to circulate the water accommodated in the tub 200 back into the tub 200, a supply hose 652 that communicates with the drain valve 720 or the drain pipe 710 to guide water discharged from the drain pipe 710 to the circulation pump 651, and a circulation hose 653 that supplies water discharged from the circulation pump 651 to the tub 200.

The circulation pump 651 may be installed at the same height as the drain valve 720 to prevent backflow of water discharged to the drain valve 720. The circulation pump 651 may also be supported by the lower support frame 320 on one side of the drain valve 720.

The circulation hose 653 extends upward to guide water discharged from the circulation pump 651 into the tub 200. The circulation unit 650 may further include a flow path connector 654 capable of fixing the circulation hose 653. The flow path connector 654 may be fixed to the upper support frame 330.

The circulation unit 650 may be configured to supply the detergent and water accommodated in the tub 200 to the laundry accommodated in the drum 400. To this end, the circulation unit 650 may be configured to supply water to the input port 221. Thus, the water discharged from the tub 200 may be supplied into the drum inlet 423 communicating with the input port 221.

To this end, the circulation unit 650 may be disposed near a front end of the lower support frame 320, and the flow path connector 654 may be exposed at the front of the upper support frame 330 for connection.

The flow path connector 654 may be disposed between the load portions 800.

The lower support frame 320 may further include a drain installation portion 325 that is coupled to or extends from the connection frame 333 to fix the drain valve 720 and a circulation installation portion 326 that is spaced apart from the drain installation portion 352, is coupled to or extends from the connection frame 333, and fixes the circulation pump 651.

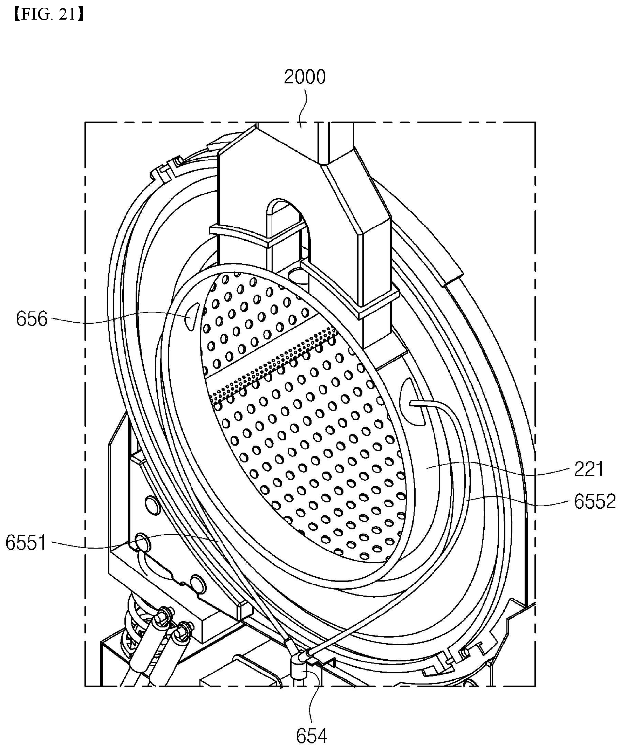

FIG. 21 shows the circulation unit of the laundry treating apparatus of the present disclosure.

The circulation unit 650 may be connected to the input port 221 to discharge water into the drum inlet 423.

The circulation unit 650 may discharge water supplied from the circulation pump 651 to the input port 221 via the circulation hose 653.

However, since the tub 200 is seated and disposed on the upper support frame 330, the distance between the circulation pump 651 seated on the lower support frame 320 and the input port 221 may increase, and extension of the circulation hose 653 from the circulation pump 651 to the input port 221 may be detrimental to durability.

Furthermore, the lower support frame 320 and the upper support frame 330 vibrate differently; therefore, if the circulation hose 653 directly connects the circulation pump 651 and the input port 221, the upper and lower ends of the circulation hose 653 may vibrate differently, which may also be detrimental to stability.

Therefore, the circulation unit 650 of the main module 100 of the present disclosure may further include a guide hose 655 that connects the circulation hose 653 to the flow path connector 654 coupled to the upper support frame 330 and extends from the flow path connector 654 to the input port 221 to convey water.

One end of the guide hose 655 may be connected to the flow path connector 654 and the other end of the guide hose may be connected to the input port 221. Consequently, since the entire guide hose 655 can vibrate together with the upper support frame 330 and the tub 200, durability and stability may be improved.

The guide hose 655 may distribute and supply the water supplied through the flow path connector 654 to both sides of the input port 221.

The circulation unit 650 may further include a circulation nozzle 656 coupled to an inner surface of the input port 221 to spray the water supplied from the guide hose 655 into the drum inlet 423.

The circulation nozzle 656 may be configured to redirect water supplied in the thickness or radial direction of the input port 221 toward the drum inlet 423.

The circulation nozzle 656 may be fixed to the inner surface of the input port 221, and a water input port thereof may be exposed on an outer surface of the input port 221 through the input port 221. The guide hose 655 may be coupled to the circulation nozzle 656 exposed on the outer surface of the input port 221.

The guide hose 655 may include a first guide hose 6551, one end of which is coupled to the flow path connector 654 and the other end of which extends to one side of the input port 221, and a second guide hose 6552, one end of which is coupled to the flow path connector 654 and the other end of which extends to the other side of the input port 221.

The circulation nozzle 656 may be provided in plural so as to be coupled to the first guide hose 6551 and the second guide hose 6552, respectively, and fixed to the inner surface of the input port 221.

The inlet 260 of the tub 200 may be formed through an upper end of the input port 221, and the inlet 260 may be disposed between the first guide hose 6551 and the second guide hose 6552.

The communication portion 2000, which will be described later, may be configured to supply hot air into the tub 200 from the upper part of the main module 100. The communication portion 2000 may be coupled and fixed to the inlet 260 disposed between the first guide hose 6551 and the second guide hose 6552.

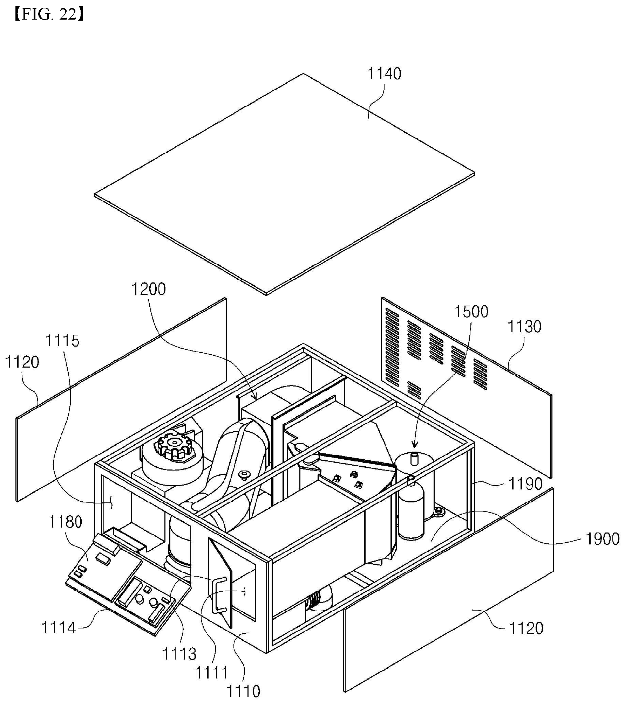

FIG. 22 shows the removable module of the laundry treating apparatus of the present disclosure.

The removable module 1000 may be removably mounted on the upper part of the main module 100 to supply hot air into the tub 200.

The case 1100, which forms the exterior of the removable module 1000, may include a front panel 1110 forming a front surface of the case, side panels 1120 extending rearward from both sides of the front panel 1110, a rear panel 1130 that connects the rears of the side panels 1120 or is disposed so as to face the front panel 1110, and an upper panel 1140 disposed above the front panel 1110, the side panels 1120, and the rear panel 1130 to prevent components in the case 1100 from being exposed to the outside.

A lower panel that shields a lower part of the case 1100 may be omitted. Consequently, communication between the interior of the case 1100 and the tub 200 may not be impeded.

The case 1100 may further include a case frame 1190 that is supported by the front panel 1110, the side panels 1120, the rear panel 1130, and the upper panel 1140 and maintains the shape of the case.

The case frame 1190 may be provided along the edges of a rectangular prism, allowing the case 1100 to be supported by the cabinet 110 of the main module 100 and to bear the load of the internal components of the removable module 1000.

Since the removable module 1000 can be provided independently of the main module 100, the removable module may further include a control panel 1180 capable of controlling the electrical components in the removable module 1000.

The control panel 1180 may be installed on the front panel 1110 so as to be easily accessible by users and operators even in the state in which the removable module 1000 is seated on the main module 100.

The rotating body 1114 may be fixed to a rear surface of the control panel 1180, and may be coupled to the front panel 1110 so as to rotate forward. When rotated from the front panel 1110, the rotating body 1114 may selectively expose the control panel 1180.

The rotating body 1114 may be rotatably coupled to a front surface of the front panel 1110 under the control communication hole 1115. Consequently, when the rotating body 1114 is rotated, the rear surface of the rotating body may be opened upward, allowing for easy installation, repair, and replacement of the control panel 1180, which is disposed higher than the main module 100.

The removable module 1000 may include a flow path forming portion 1200 provided in the case 1100 to move air in the tub 200.

The flow path forming portion 1200 may be provided as a circulation duct to guide the air introduced from the tub 200 back to the tub 200.

The removable module 1000 may include a heat exchange unit 1500 provided in the case 1100 to remove moisture from the air in the flow path forming portion 1200. The heat exchange unit 1500 may be seated on and supported by a seating portion 1900. The heat exchange unit 1500, which includes a compressor, an evaporator, and a condenser, may constitute a heavy load. The seating portion 1900 may support the load of the heat exchange unit 1500.

The seating portion 1900 may be supported by the case frame 1190. The seating portion 1900 may be fixed to or seated on the case frame 1190. The seating portion 1900 may be configured in the form of a tray. Furthermore, the seating portion 1900 may be provided as a structure capable of transmitting the load of the heat exchange unit 1500 to the cabinet 110 via the case 1000.

In the laundry treating apparatus of the present disclosure, the flow path forming portion 1200, which circulates the air in the tub 200, may be installed outside the cabinet 110, thereby maximizing the volume that the tub 200 can occupy in the main module 100 to suit a commercial laundry treating apparatus.

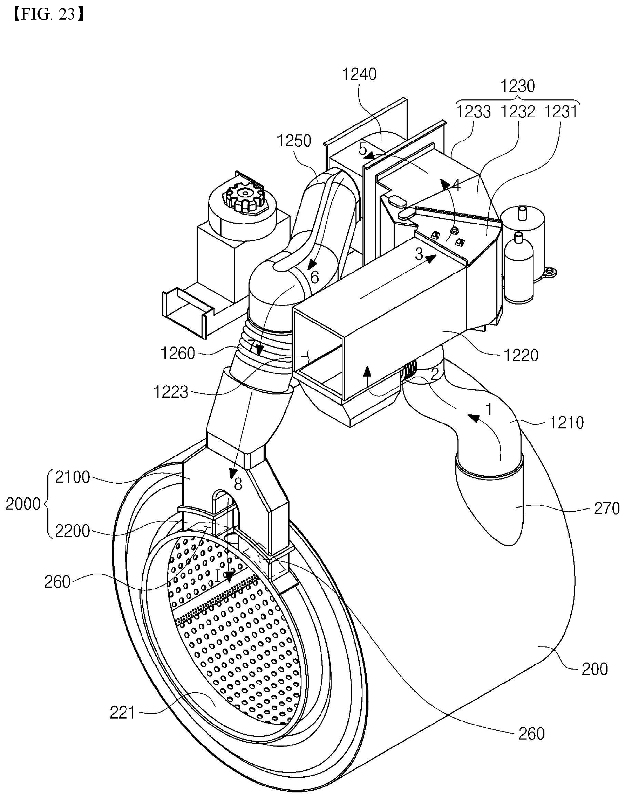

FIG. 23 shows the structure of the flow path forming portion of the removable module of the present disclosure.

The flow path forming portion 1200 may form a flow path through which air can enter the tub 200, flow outside the tub 200, and enter the tub 200 again.

The flow path forming portion 1200 may include an introduction pipe 1210 coupled to an outlet 270 of the tub 200 to allow air from in the tub 200 to be introduced therethrough, and a filter duct 1220 coupled to the other end of the introduction pipe 1210 to provide a flow path for air introduced from the tub 200, a movement duct 1230 disposed at the other end of the filter duct 1220 to allow for heat exchange of the air introduced from the filter duct 1220, a fan housing 1240 which is coupled to the other end of the movement duct 1230 and in which a blowing fan that moves the air is disposed, a discharge duct 1250 which is coupled to and extends from the fan housing 1240 and through which the heat-exchanged air moves, and a discharge pipe 1260 coupled to the other end of the discharge duct 1250 to discharge air toward the inlet 260 of the tub 200.

The introduction pipe 1210 and the discharge pipe 1260 may be made of an elastic material, such as a corrugated pipe, to prevent breakage of or damage to the tub 200 even if the tub vibrates independently of the removable module 1000.

The introduction pipe 1210 may have one end coupled to the outlet 270 and the other end coupled to the filter duct 1220.

The filter duct 1220 may be provided with a filter capable of filtering the air introduced from the tub 200. Therefore, the inlet of the filter duct 1220 may be disposed farther forward than the introduction pipe 1210 for easy removal and replacement of the filter.

The filter duct 1220 may be exposed on the front surface of the case 1100.

The filter duct 1220 may include an insertion surface 1223 that is open at the front to allow the filter to be inserted and removed. The insertion surface 1223 may communicate with the filter communication hole 1111.

The introduction pipe 1210 may be connected closer to the front than to the rear of the filter duct 1220.

The filter duct 1220 may be disposed higher than the introduction pipe 1210, and the front of a lower surface of the filter duct 1220 may communicate with the other end of the introduction pipe 1210.

Thus, the entire configuration of the flow path forming portion 1200 extending from the other end or the rear of the filter duct 1220 may be disposed at the height corresponding to the filter duct 1220, thereby preventing interference with the introduction pipe 1210 and the outlet 270.

The heat exchange unit 1500 that exchanges heat with the air that has passed through the filter duct 1220 may be installed in the movement duct 1230.

The movement duct 1230 may include an evaporation duct 1231, in which the air is cooled and moisture contained in the air is condensed, and a condensation duct 1233, in which the air is heated into hot air.

Meanwhile, the movement duct 1230 may further include a connection duct 1232 disposed between the evaporation duct 1231 and the condensation duct 1233 to connect the evaporation duct 1231 and the condensation duct 1233 to each other.

The connection duct 1232 may separate the evaporation duct 1231 and the condensation duct 1233 from each other, thereby preventing the air passing through the evaporation duct 1231 from being insufficiently cooled or the air passing through the condensation duct 1233 from being insufficiently heated.

The fan housing 1240 may be coupled to the other end of the condensation duct 1233 to move air from the introduction pipe 1210 to the condensation duct 1233 under negative pressure. Consequently, even if the introduction pipe 1210, the filter duct 1210, and the movement duct 1230 are not disposed in a straight line, air may move evenly along the introduction pipe 1210, the filter duct 1210, and the movement duct 1230.

The discharge duct 1250 may provide a flow path through which air discharged from the fan housing 1240 can be concentrated and move toward the inlet 260 of the tub 200.

The discharge pipe 1260 may extend downward from the other end of the discharge duct 1250 and may extend toward the inlet 260 disposed lower than the discharge duct 1250.

Meanwhile, when the removable module 1000 is coupled to the main module 100, a communication portion 2000 that connects the discharge pipe 1260 and the inlet 260 to each other may be additionally installed.

The inlet 260 of the tub 200 may be provided at the input port 221, and a nozzle or various sensors may be disposed at the input port 221. Therefore, properly coupling the discharge pipe 1260 to the inlet 260 disposed at an outer circumferential surface of the input port 221 may be difficult, and the discharge pipe may interfere with the nozzle or the sensors.

Therefore, the communication portion 2000 may be disposed to maintain communication between the discharge pipe 1260 and the inlet 260, guiding the air discharged from the discharge pipe 1260 so as to flow completely into the inlet 260.

A lower end of the communication portion 2000 may be seated in the input port 221 and coupled to the inlet 260 in tight contact therewith, and an upper end of the communication portion may be coupled to the other end of the discharge pipe 1260.

When the blowing fan provided in the fan housing 1240 rotates, air capable of holding moisture at the outlet 270 may be discharged from the tub 200 and enter the introduction pipe 1210 (1). The air that has entered the introduction pipe 1210 may be filtered by the filter while passing through the filter duct 1220 (2). The air filtered by the filter may move to the movement duct 1230 (3).

The air passing through the movement duct 1230 may be cooled, causing the moisture contained in the air to be condensed and removed, may be heated into high-temperature, dry hot air, and may move to the fan housing 1240 (4).

The air that has entered the fan housing 1240 may be discharged at high pressure by the blowing fan (5). The air discharged from the fan housing 1240 may move along the discharge duct 1250 (6).

The air that has passed through the discharge duct 1250 may be guided to the discharge pipe 1260 (7).

The air that has passed through the discharge pipe 1260 may move along the communication portion 2000 and flow into the inlet 260 (8). The air entering the inlet 260 may dry the laundry accommodated in the drum 400 and then be discharged to the outlet 270.

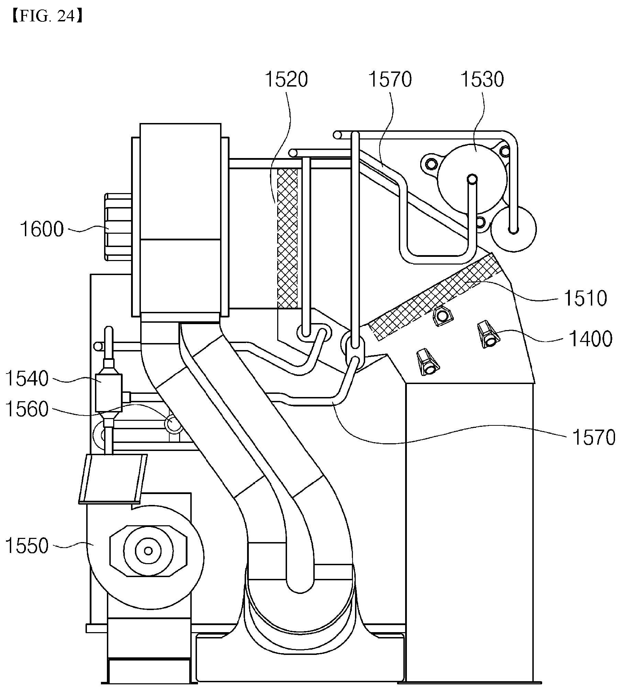

FIG. 24 shows a refrigerant circuit including an auxiliary heat exchanger of the laundry treating apparatus of the present disclosure.

The heat exchange unit 1500 may include an evaporator 1510 installed in the evaporation duct 1231, a condenser 1520 installed in the condensation duct 1233, a compressor 1530 that compresses refrigerant that has passed through the evaporator 1510 and supplies the refrigerant to the condenser 1520, and an expansion valve 1540 that expands and cools the refrigerant that has passed through the condenser 1520 and guides the refrigerant to the evaporator 1510.

The components of the heat exchange unit 1500, such as the evaporator 1510, the condenser 1520, the compressor 1530, and the expansion valve 1540, may constitute a refrigerant circuit with a refrigerant pipe 1570 through which the refrigerant flows.

Meanwhile, the heat exchange unit 1500 may further include an auxiliary heat exchanger 1550 connected to the condenser 1520 and the evaporator 1510 to perform heat exchange between the refrigerant and the outside air and a switching valve 1560 that selects whether the refrigerant delivered from the condenser 1520 will be supplied to the expansion valve 1540 or to the auxiliary heat exchanger 1550.

Depending on the operation of the switching valve 1560, the auxiliary heat exchanger 1550 may function as an evaporator that heats the refrigerant flowing through the refrigerant pipe 1570 or as a condenser that cools the refrigerant flowing through the refrigerant pipe 1570.

The blowing fan 1600 may be coupled to the fan housing 1240 to move air in the flow path forming portion 1200 such that the air exchanges heat with the refrigerant in the heat exchange unit 1500.

The air introduced from the filter duct 1220 may be the air discharged from the tub 200 and may contain foreign matter such as lint separated from laundry. Even if the filter provided in the filter duct 1220 filters out the foreign matter, some of the foreign matter may move toward the evaporator 1510. In particular, since the evaporator 1510 is configured to cool the air, the moisture contained in the air often condenses, whereby the surface of the evaporator may be wet. Consequently, the foreign matter that has passed through the filter duct 1220 may easily come into contact with the surface of the evaporator 1510 and may form increasingly larger clumps.

The removable module 1000 of the present disclosure may further include a cleaning unit 1400 configured to spray water onto the evaporator 1510 or into the movement duct 1230 to remove the foreign matter attached to the evaporator 1510.

The cleaning unit 1400 may be configured to receive water from an external water source or from the water supply unit 600 and to spray water into the evaporation duct 1231.

The cleaning unit 1400 may be disposed between the evaporation duct 1231 and the filter duct 1220, or may be disposed upstream of the evaporator 1510 in the evaporation duct 1231.

The cleaning unit 1400 may be provided at an upper surface thereof with a nozzle configured to spray the supplied water.

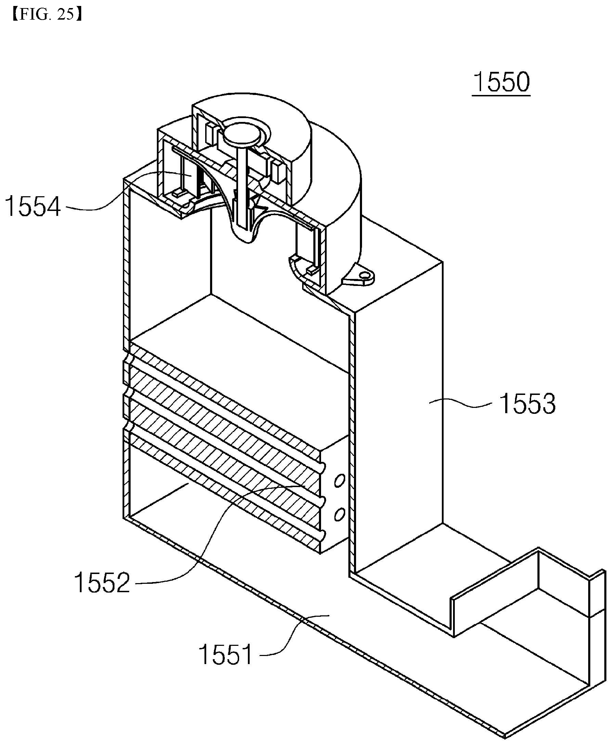

FIG. 25 shows the internal structure of the auxiliary heat exchanger of the laundry treating apparatus of the present disclosure.

The auxiliary heat exchanger 1550 may include a heat exchange fin 1552 that allows the refrigerant pipe 1570 to extend therethrough to exchange heat with the air introduced into the case 1100, an exchange duct 1553 in which the heat exchange fin 1552 is provided and which guides the air in one direction, and an auxiliary fan 1554 that introduces air into the exchange duct 1553.

The auxiliary heat exchanger 1550 may include an inlet portion 1555 through which outside air is introduced, and an outlet portion 1556 through which the outside air, after heat exchange with the heat exchange fin 1552, is discharged.

The inlet portion 1555 may communicate with the internal communication hole 1112. The inlet portion 1555 may be disposed in front of an auxiliary duct 1551, and the outlet portion 1556 may be formed at the auxiliary fan 1554. Thus, the outside air may flow into the auxiliary duct 1551, pass through the exchange duct 1553, and be discharged through the auxiliary fan 1554.

The auxiliary fan 1554 may be disposed downstream of the exchange duct 1553, thereby evenly exposing the air in the case 1100 to the heat exchange fin 1552 through negative pressure.

The auxiliary heat exchanger 1550 may further include an auxiliary duct 1551 connected upstream of the exchange duct 1553 to receive the air from the case 1100.

The auxiliary duct 1551 may extend closer to the front panel 1110 than to the exchange duct 1553 to facilitate a more efficient supply of outside air.

For example, the exchange duct 1553 may extend vertically, and the auxiliary fan 1554 may be seated on the exchange duct 1553. The heat exchange fin 1552 may be disposed lower than the auxiliary fan 1554 in the exchange duct 1553. The auxiliary duct 1551 may extend further from a lower part of the exchange duct 1553 toward the front duct 1110. Thus, outside air may be continuously introduced into the heat exchange fin 1552 through the front duct 1110, which is always exposed to the indoor environment, whereby the performance of the auxiliary heat exchanger 1550 may be ensured.

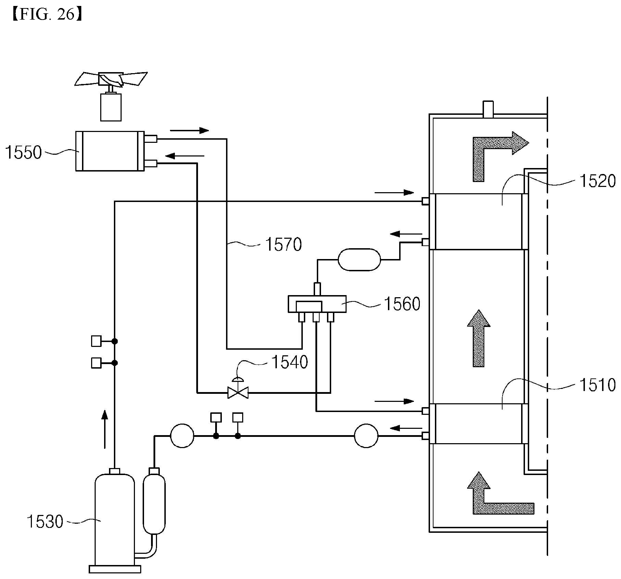

FIG. 26 shows an embodiment in which the auxiliary heat exchanger 1550 of the laundry treating apparatus of the present disclosure is operated.

FIG. 26 shows a state in which the auxiliary heat exchanger 1550 is used as an evaporator by the switching valve 1560; however, the switching valve 1560 may change the flow path to a state in which the auxiliary heat exchanger 1550 is used as a condenser.

Using the auxiliary heat exchanger 1550 as an evaporator may refer to a state in which the refrigerant that has passed through the condenser 1520 passes through the expansion valve 1540 via the switching valve 1560 and is guided to the auxiliary heat exchanger 1550, and using the auxiliary heat exchanger 1550 as a condenser may refer to a state in which the refrigerant that has passed through the condenser 1520 is guided directly to the auxiliary heat exchanger 1550 via the switching valve 1560.

Since the laundry treating apparatus of the present disclosure is provided as a commercial laundry treating apparatus, it is necessary to rapidly dry a large amount of laundry. To this end, in the laundry treating apparatus of the present disclosure, the sectional area of the evaporator 1510 must be increased to supply hot air rapidly from the early stage of a drying operation, and the sectional area of the condenser 1520 must be increased to supply high-temperature hot air during the middle and late stages of the drying operation.

However, if the areas of the evaporator and the condenser are increased excessively, the volume of the heat exchange unit 1500 may increase excessively.

Furthermore, while increasing the area of the evaporator may help heat the compressor 1530 initially, if the compressor 1530 is operating normally, an excessive amount of heat may be supplied to the compressor 1530, causing the compressor 1530 to overheat.

Furthermore, while increasing the area of the condenser may help supply sufficient hot air quickly during the early stage of the drying operation, if the compressor 1530 is operating normally, an excessive amount of heat may be supplied into the drum 400, potentially damaging the laundry, and the temperature throughout the entire flow path rises uniformly, which may result in a decrease in the coefficient of performance.

To address this, in the laundry treating apparatus of the present disclosure, the auxiliary heat exchanger 1550 and the switching valve 1560 may be additionally provided, and the auxiliary heat exchanger 1550 may be used as the evaporator 1510 or the condenser 1520 by switching, as needed.

For example, during the early stage of the drying operation, the control panel 280 may control the switching valve 1560 such that the auxiliary heat exchanger 1550 can be used as the evaporator 1510. Specifically, the switching valve 1560 may guide the refrigerant delivered from the condenser 1520 to the expansion valve 1540, and the refrigerant that has passed through the expansion valve 1540 may pass through the auxiliary heat exchanger 1550 and then enter the evaporator 1510.

In this process, the refrigerant may absorb heat from the outside air in the auxiliary heat exchanger 1550 and then flow into the evaporator 1510, in which the refrigerant may absorb heat from the air flowing through the flow path forming portion 1200. As a result, the energy of the refrigerant entering the compressor 1530 may further increase, allowing the compressor 1530 to operate normally and reducing the time required to raise the pressure of the refrigerant.

When the compressor 1530 is operating normally, such as during the middle or late stage of the drying operation, the control panel 1180 may control the switching valve 1560 such that the auxiliary heat exchanger 1550 can be used as the condenser 1520. Specifically, the switching valve 1560 may guide the refrigerant delivered from the condenser 1520 directly to the auxiliary heat exchanger 1550, and the refrigerant that has passed through the auxiliary heat exchanger 1550 may flow through the expansion valve 1540 and then enter the evaporator 1510.

In this process, the refrigerant may discharge heat to the air flowing through the flow path forming portion 1200 to heat the air in the condenser 1520, and then move to the auxiliary heat exchanger 1550, in which some of the remaining heat may be discharged to the outside. Consequently, the refrigerant may enter the evaporator 1510 at a sufficient temperature and pressure after passing through the expansion valve 1540 in the state in which enthalpy of the refrigerant has significantly decreased. As a result, overheating of the heat exchange unit 1500 may be prevented, and a larger temperature difference between the evaporator 1510 and the condenser 1520 may be maintained, thereby preventing a decrease in the coefficient of performance.

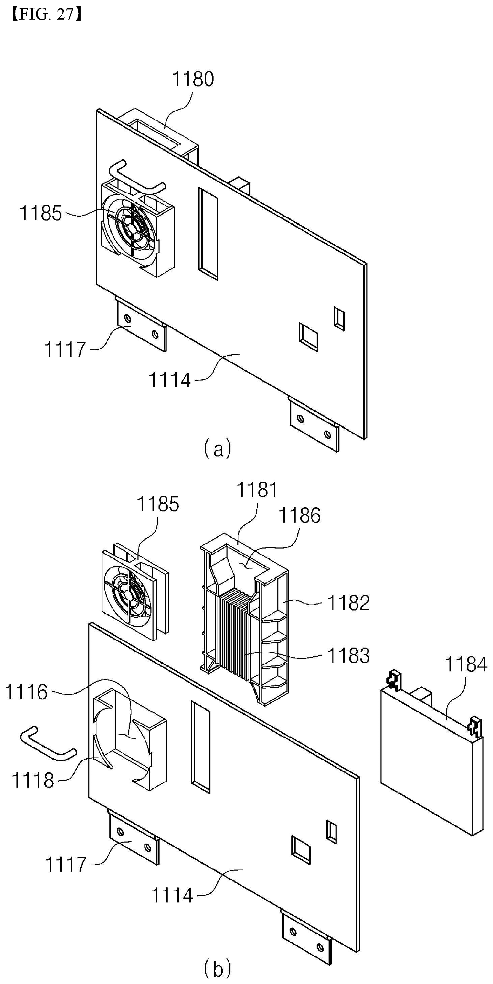

FIG. 27 shows a specific structural embodiment of the front panel.

Referring to FIG. 27 (a), the rotating body 1114 may be rotatably mounted on the front panel 1110 via a rotating hinge 1117 coupled to the front panel 1110.

The rotating body 1114 may be configured to open and close the control communication hole 1115.

The rotating hinge 1117 may be coupled to a lower part of the rotating body 1114 and coupled to a front surface of the front panel 1110, which is disposed at a lower end of the control communication hole 1115.

The rotating body 1114 may further include a fan installation hole 1116 formed through one surface thereof, and a heat dissipation fan 1185 for cooling the control panel 1180 coupled to the rear surface of the rotating body 1114 may be installed in the fan installation hole 1116.

The heat dissipation fan 1185 may be disposed on the front surface of the rotating body 1114 to draw in outside air located in front of the front panel 1110, and the control panel 1180 may be coupled to the rear surface of the rotating body 1114 so as to be cooled by the drawn-in outside air.

Referring to FIG. 27(b), the rotating body 1114 may include a heat dissipation support 1118 protruding from an outer surface of the fan installation hole 1116 to support or fix the heat dissipation fan 1185.

The heat dissipation fan 1185 may be seated on the heat dissipation support 1118 and disposed so as to face the fan installation hole 1116.

The heat dissipation fan 1185 may be configured to guide outside air located in front of the rotating body 1114 to the rear surface of the rotating body 1114 or into the case 1100.

The control panel 1180 may include a panel body 1181 facing the rear surface of the rotating body 1114, a heat dissipation fin 1183 seated on a front surface of the panel body 1181 and disposed so as to face the fan installation hole 1116 or the heat dissipation fan 1185, and a circuit board 1184 that is mounted on the panel body 1181, is cooled by the heat dissipation fin 1183, and is capable of controlling the electrical components in the case 1100.

The panel body 1181 may be formed in a case shape to receive the heat dissipation fin 1183, and may be provided with an open slot 1186 for moving the air introduced from the heat dissipation fan 1185 to at least one of outer surfaces of the panel body.

For example, the panel body 1181 may include mounting ribs 1182 that extend from both sides thereof to receive the heat dissipation fin 1181 and is coupled to the rotating body 1114. Consequently, the mounting ribs 1182 and the panel body 1181 may form open slots 1186 at the top and bottom.

The open slot 1186 may be configured to discharge the air introduced through the heat sink fan 1185 to the outside of the control panel 1180, whereby air may be continuously introduced into the control panel 1180.

The removable module 1000 may use the air discharged through the open slot 1186 to cool the interior of the case 1100, such as the auxiliary heat exchanger 1550 or the blowing fan 1600, or to perform heat exchange.

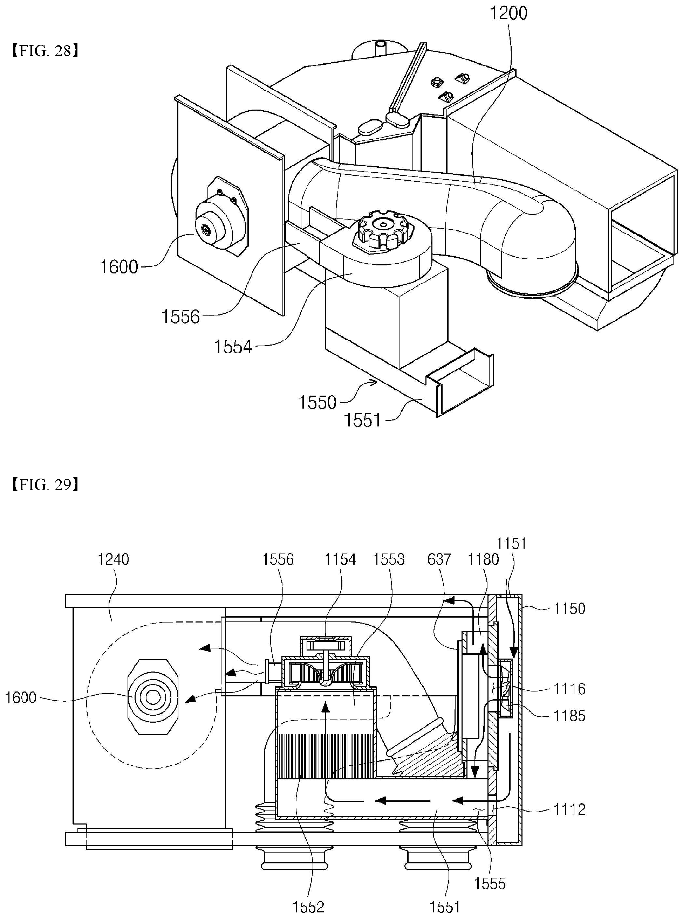

FIG. 28 shows a structure for moving the air that has entered the case of the laundry treating apparatus of the present disclosure.

The air introduced into the case 1100 through the heat dissipation fan 1185 may enter the auxiliary heat exchanger 1550.

The auxiliary heat exchanger 1550 may be configured such that the auxiliary duct 1551 is disposed under the control panel 1180 so as to communicate with the open slot 1186.

Furthermore, the auxiliary heat exchanger 1550 may be configured such that the outlet 1556 of the auxiliary fan 1554 faces the blowing fan 1600. Thus, the outside air discharged through the open slot 1186 may be supplied to the blowing fan 1600 via the heat exchange fin 1552.

FIG. 29 shows the flow path relationship between the front panel and the blowing fan of the auxiliary heat exchanger.

The front panel 1110 may be disposed spaced apart from the rear surface of the front door 1150 by a predetermined distance. The front door 1150 may be formed in an upper part thereof with a door hole 1151 that communicates with the outside air.

When the heat dissipation fan 1185 is driven, the outside air present outside the case 1100 may introduced to the front of the front panel 1110 and into the front door 1150 (1).

Air that has been introduced up to the front of the front panel 1110 may pass through the front panel 1110 via the fan installation hole 1116 and reach the control panel 1180 (2).

The outside air that has entered the control panel 1180 may come into contact with the heat dissipation fin 1183 to cool heat dissipation fin 1183 and may be discharged through the open slot 1186 by the heat dissipation fan 1185. Furthermore, the outside air that has entered the control panel 1180 may be discharged through the open slot 1186 by the heat sink fan 1185 and may reach the front of the auxiliary duct 1151. In addition, the outside air present in front of the front panel 1180 may reach the front of the auxiliary duct 1551 via the internal communication hole 1112 (3).

The air that has been introduced from the auxiliary duct 1551 to the input portion 1555 of the auxiliary heat exchanger 1500 may move along the auxiliary duct 1551 (4).

When the auxiliary fan 1554 is driven, the air introduced into the other end of the auxiliary duct 1551 may pass through the heat exchange fins 1552 while moving along the exchange duct 1553 (5). When the heat exchange fin 1552 functions as an evaporator, the outside air may be cooled, and when the heat exchange fin 1552 functions as a condenser, the outside air may be heated. The outside air that has passed through the auxiliary fan 1554 may move along the outlet portion 1556 of the auxiliary heat exchanger and reach the blowing fan 1600 to cool the motor of the blowing fan 1600.

As a result, outdoor air outside the case 1100 may be continuously introduced into the case 1100 to cool the control panel 1180 and the blowing fan 1600, and the auxiliary heat exchanger 1550 may normally exchange heat with the outside air, thereby maintaining the performance of the heat exchange unit 1500.

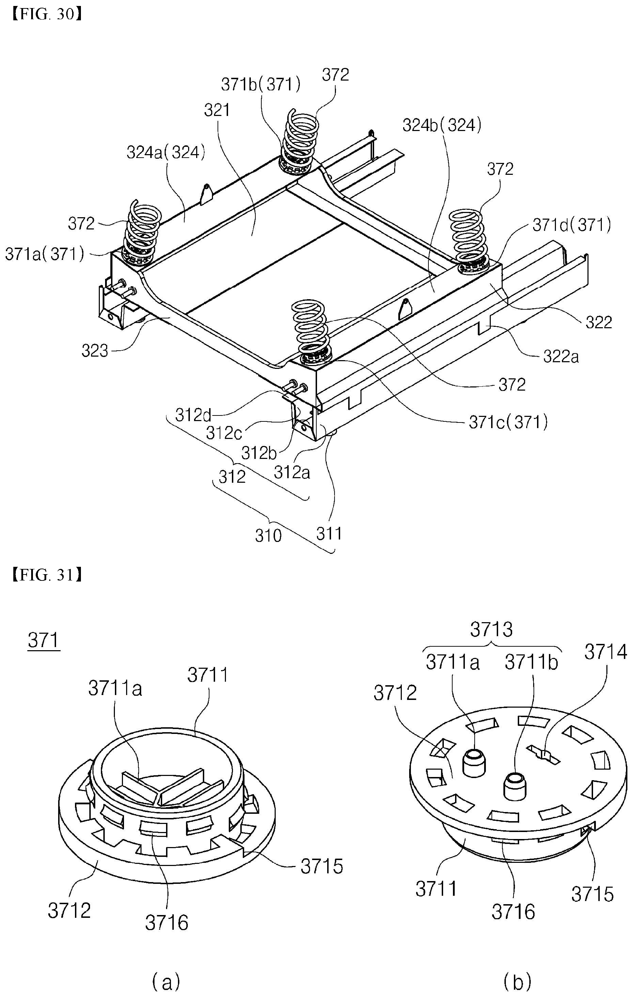

FIG. 30 is a view illustrating the detailed structure of the support and the arrangement of the spring holder of the laundry treating apparatus of the present disclosure.

The spring holder 371 may be seated on the installation frame 324. The spring holder 371 is configured to guide the installation direction of the spring 372. The spring holder 371 may be provided in four. The spring holder 371 may include a first spring holder 371a disposed at the left front of the tub 200, a second spring holder 371b disposed at the left rear of the tub 200, a third spring holder 371c disposed at the right front of the tub 200, and a fourth spring holder 371d disposed at the right rear of the tub 200.

The first spring holder 371a is disposed offset toward the front of an installation frame 324a disposed on the right side. The second spring holder 371b is disposed offset toward the rear of the installation frame 324a disposed on the right side. The third spring holder 371c is disposed offset toward the front of an installation frame 324b disposed on the left side. The fourth spring holder 371d is disposed offset toward the rear of the installation frame 324b disposed on the left side.

A seating surface of the installation frame 324 on which the spring holder 371 is seated is inclined toward the inside of the cabinet 110. The right installation frame 324a is inclined downward toward the left. The left installation frame 324b is inclined downward toward the right.

The spring 372 is mounted on the spring holder 371. The seating position and direction of the spring holder 371 may determine the coupling direction of the spring 372. In the embodiment, the plurality of springs 372 may be disposed in a front-to-back symmetrical or left-to-right symmetrical configuration. To this end, the spring holders 371 may be disposed in a front-to-back symmetrical or left-to-right symmetrical configuration.

Since the installation frame 324 is inclined, the spring 372 fixed to the spring holder 371 may also be inclined toward the inside of the cabinet 110.

The base 310 of the support 300 may include the base body 312 and the leg 311. The base body 312 may include a first body surface 312a, a second body surface 312b, a third body surface 312c, and a fourth body surface 312d.

The first body surface 312a may form an outermost surface of the base body 312. The second body surface 312b may be bent from the first body surface 312a and may form a bottom surface of the base body 312. The leg 311 may be provided on the second body surface 312b. The third body surface 312c may be bent upward from the second body surface 312b and may extend toward the lower support frame 320. The fourth body surface 312d may be bent from the third body surface 312c, and the lower support frame 320 may be seated on the fourth body surface 312d. The transport plate 321 may be seated on the fourth body surface 312d.

FIG. 31 shows the detailed structure of the spring holder of the laundry treating apparatus of the present disclosure.

The spring holder 371 may include a seating body 3712 seated on the installation frame 324 and a coupling body 3711 protruding from the seating body 3712.

The seating body 3712 may be flat. The seating body 3712 may be provided with a seating guide 3713. The seating guide 3713 may be formed on a lower surface of the seating body 3712. The seating guide 3713 may protrude from the bottom surface of the seating body 3712.

The coupling body 3711 may be cylindrical. The spring 372 may be fixed to an outer circumferential surface of the coupling body 3711. The spring 372 may be fitted onto the coupling body 3711. A spring terminal 3715 and a fitting protrusion 3716 may be provided on the outer circumferential surface of the coupling body 3711. The spring terminal 3715 is configured to fix the spring 372 at a set position. The spring terminal 3715 may restrict one end of the spring 372 to define the position of the spring 372. The spring 372 has a helical shape and is coupled to the outer circumferential surface of the coupling body 3711 by screw engagement. At the correct coupling position, the other end of the spring 372 contacts the spring terminal 3715. Thus, the position of the spring 372 relative to the spring holder 371 is set.

The seating guide 3713 may protrude from the lower surface of the seating body 3712 and may protrude in a direction opposite the direction in which the coupling body 3711 protrudes.

The seating guide 3713 may include a first guide protrusion 3713a and a second guide protrusion 3713b. The first guide protrusion 3713a and the second guide protrusion 3713b may be provided at positions offset from the center toward one side. The seating guide 3713 guides the seating position and seating direction of the spring holder 371 seated on the lower support frame 320. The first guide protrusion 3713a and the second guide protrusion 3713b may be provided offset from the center to one side to guide the mounting position.

The installation frame 324 may be provided with a guide receiving portion that receives the seating guide 3713. In the embodiment, since the seating guide 3713 is provided as the first guide protrusion 3713a and the second guide protrusion 3713b, the guide receiving portion may be configured as guide recesses that receive the guide protrusions. The seating position and direction of the spring holder 371 may be defined as the guide protrusions are received in the guide recesses.

The spring holder 371 may be provided with a fastening hole 3714 in addition to the seating guide 3713. A fastening member, such as a rivet, may pass through the fastening hole 3714 to fasten the installation frame 324 and the spring holder 371. In the embodiment, the fastening hole 3714 may be provided at a position offset from the center toward one side. In the embodiment, the seating guide 3713 and the fastening hole 3714 may be provided on opposite sides relative to the center of the seating body 3712.

The spring holders 371 may be configured such that the front and rear spring holders 371 are disposed in a front-to-back symmetrical configuration or the left and right spring holders 371 are disposed in a left-to-right symmetrical configuration. The reference point for the front-to-back and left-to-right symmetry may be the seating guide 3713. The reference point for the front-to-back and left-to-right symmetry may be the seating guide 3713 and the fastening hole 3714.

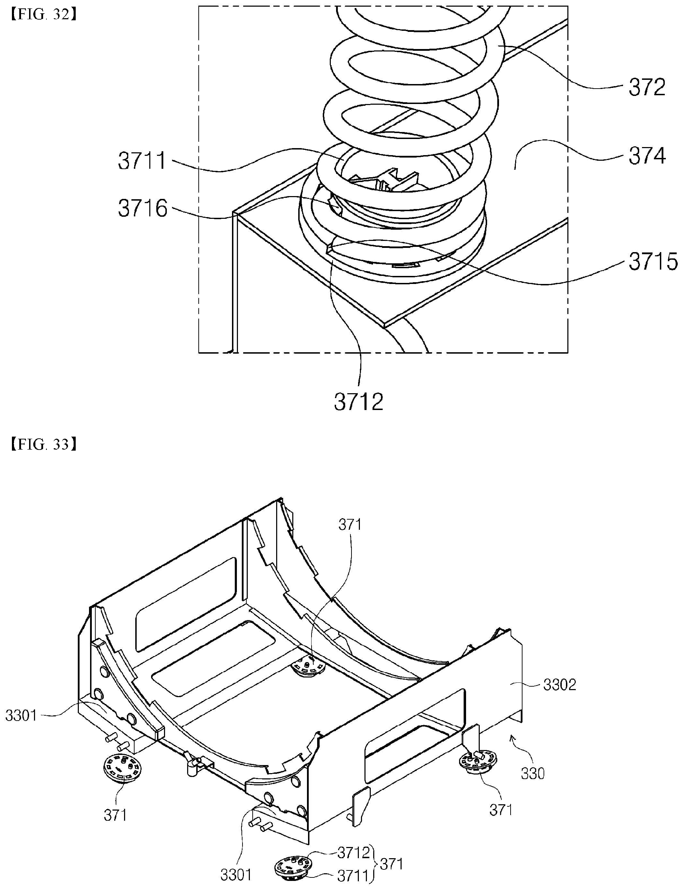

FIG. 32 shows the state in which the spring is fixed to the spring holder.

The spring 372 may be fixed to the spring holder 371. The spring 372 may be fitted onto the coupling body 3711 while wrapping around the outer circumferential surface of the coupling body 3711.

The other end of the spring 372 may be supported by the spring terminal 3715. The spring 372 may be coupled to the spring holder 371 by screw engagement.

The fitting protrusion 3716 may fix the spring 372.

FIG. 33 is a view illustrating the coupling relationship between the spring holder and the upper support frame of the laundry treating apparatus of the present disclosure.

The upper support frame 330 may be supported by the spring 372. The end of the spring 372 may be fixed to the spring holder 371. Therefore, the upper support frame 330 may be seated on the spring holder 371. The spring holder 371 on which the upper support frame 330 is seated may be the same as the spring holder 371 supported by the lower support frame 320.

The seating plate 331 of the upper support frame 330 may be seated on the spring holder 371. A guide receiving portion for receiving the seating guide 3713 may be formed in the seating plate 331. In the embodiment, since the seating guide 3713 is provided as the first guide protrusion 3713a and the second guide protrusion 3713b, the guide receiving portion may be configured as guide recesses in which the guide protrusions are received. The seating position and seating direction of the spring holder 371 may be defined as the guide protrusions are received in the guide recesses.

The plurality of springs 372 may be disposed in a front-to-back symmetrical or left-to-right symmetrical configuration. To this end, the spring holders 371, which are coupled to the upper support frame 330, may be disposed in a front-to-back symmetrical or left-to-right symmetrical configuration.

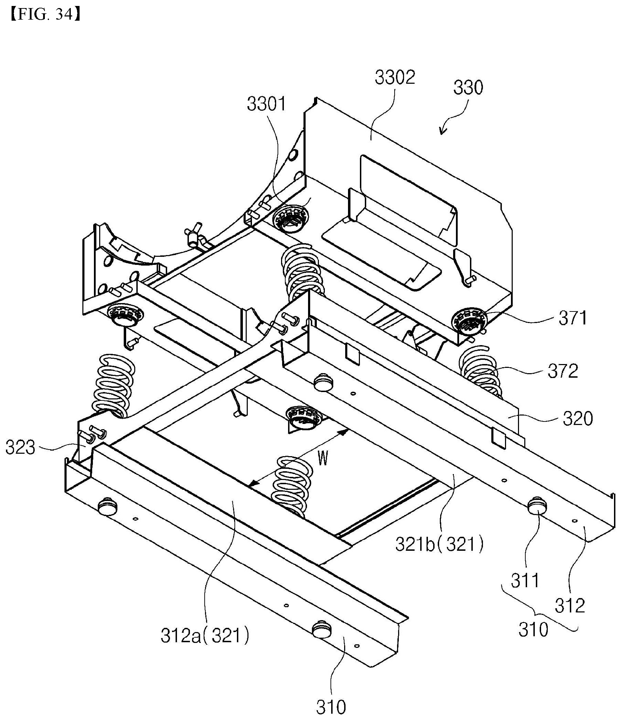

FIG. 34 is a view illustrating the connection structure between the lower support frame and the upper support frame of the laundry treating apparatus of the present disclosure.

The spring 372 may be provided between the upper support frame 330 and the lower support frame 320. The spring 372 may be seated on the lower support frame 320, and the upper support frame 330 may be seated on the spring 372.

The seating plate 331 may be inclined downward toward the inside. Since the seating plate 331 is inclined, the spring 372 may be supported in an inclined state.

The spring 372 may stably support the load of the tub 200 transmitted through the upper support frame 330. The spring 372 may absorb the vibration of the tub 300 and support the tub 300.

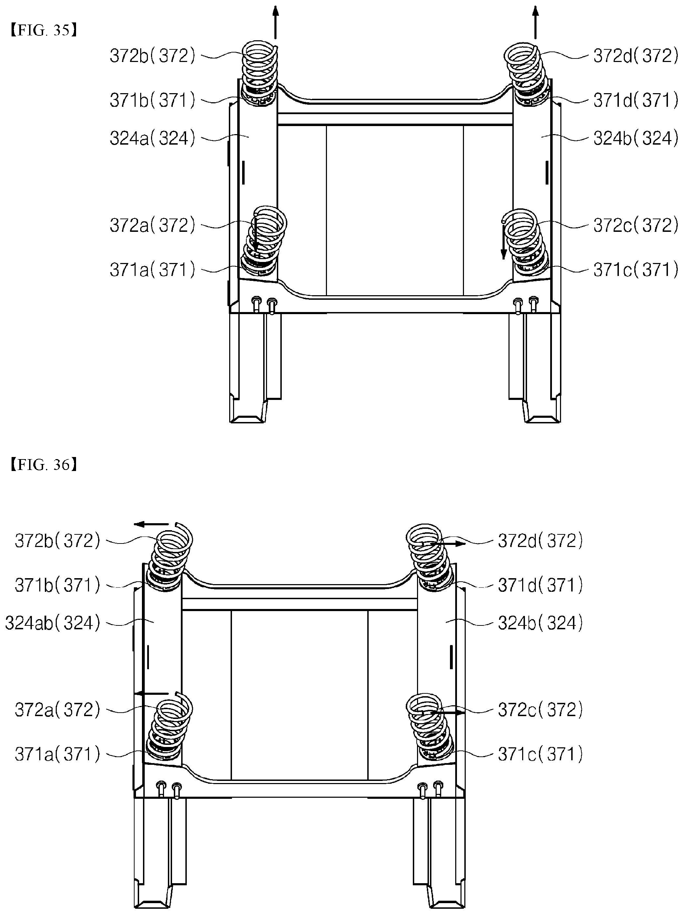

FIG. 35 is a view illustrating the arrangement of springs according to an embodiment of the laundry treating apparatus of the present disclosure.

The plurality of the springs 372 may be disposed with one each at the front and rear on the left side and one each at the front and rear on the right side. The springs 372 may have identical specifications, including the diameter and the number of turns.

The plurality of springs 372 may be disposed in a front-to-back symmetrical configuration.

In the embodiment, the two springs 372a and 372c disposed at the front and the two springs 372b and 372d disposed at the rear may be provided in a front-to-back symmetrical configuration.

In the embodiment, as shown, upper ends of the two springs 372a and 372c disposed at the front and upper ends of the two springs 372b and 372d disposed at the rear may be disposed so as to face opposite directions, i.e., to face away from each other, thereby achieving the front-to-back symmetry. The arrangement in which the upper ends are disposed so as to face away from each other means that the upper ends are disposed such that the directions in which the upper ends extend tangentially (see the arrows in the figure) face away from each other.

In the embodiment, unlike what is shown, the upper ends of the two springs 372a and 372c disposed at the front and the upper ends of the two springs 372b and 372d disposed at the rear may be disposed so as to face each other, thereby achieving the front-to-back symmetry. The arrangement in which the upper ends are disposed so as to face each other means that the upper ends are disposed such that the directions in which the upper ends extend tangentially face each other.

The upper end and the lower end of each of the four springs 372a, 372b, 372c, and 372d are fixed to the spring holders 371. Since the spring holders 371 and the springs 372 have the same specifications, once the position of the spring holders 371 is determined, the position of the springs 372 may also be determined. To this end, the spring holder 371 may also be provided in a front-to-back symmetrical configuration.

FIG. 36 is a view illustrating the arrangement of springs according to another embodiment of the laundry treating apparatus of the present disclosure.

The plurality of springs 372 may be disposed in a left-to-right symmetrical configuration.

In the embodiment, the two springs 372a and 372b disposed on the right side of the laundry treating apparatus and the two springs 372c and 372d disposed on the left side of the laundry treating apparatus may be provided in a left-to-right symmetrical configuration.

In the embodiment, as shown, the upper ends of the two springs 372a and 372b disposed on the right side and the upper ends of the two springs 372c and 372d disposed on the left side may be disposed so as to face away from each other, thereby achieving the left-to-right symmetry.

In the embodiment, unlike what is shown, the upper ends of the two springs 372a and 372b disposed on the right side and the upper ends of the two springs 372c and 372d disposed on the left side may be disposed so as to face each other, thereby achieving the left-to-right symmetry.

The upper end and the lower end of each of the four springs 372a, 372b, 372c, and 372d are fixed to the spring holders 371. Since the spring holders 371 and the springs 372 have the same specifications, once the position of the spring holders 371 is determined, the position of the springs 372 may also be determined. To this end, the spring holder 371 may also be provided in a left-to-right symmetrical configuration.

The four springs used in conventional commercial washing machines include two types of springs, such as right-coiled springs and left-coiled springs, to prevent twisting of the upper structure supported by the springs. That is, two right-coiled springs and two left-coiled springs are used. However, this leads to problems such as spring mix-ups and incorrect assembly. According to the embodiment, all four springs are wound in a single direction and have the same specifications, thereby preventing spring mix-ups. Furthermore, since the springs are disposed in a front-to-back or left-to-right symmetrical configuration, each of the plurality of springs 372 may cancel out the rotational force applied to the tub 200 and stably support the tub 200.

The present disclosure may be practiced in various modifications, and the scope of the present disclosure is not limited to the embodiments described above. Therefore, if the modifications include elements constituting the claims of the present disclosure, it should be considered that the modifications fall within the scope of the present disclosure.

## Claims

1. A laundry treating apparatus comprising:
a cabinet;
a tub provided in the cabinet, the tub being configured to store wash water;
a drum rotatably provided in the tub, the drum being configured to accommodate laundry;
a plurality of springs configured to absorb vibration of the tub; and
a support frame configured to support a load of the tub transmitted by the plurality of springs, wherein
the plurality of springs comprises at least four springs configured to support a lower part of the tub in a front-to-back direction and a left-to-right direction, the plurality of springs being wound in a single direction, and
the two springs disposed at a front and the two springs disposed at a rear are disposed in front-to-back symmetry, or
the two springs disposed on a left and the two springs disposed on a right are disposed in left-to-right symmetry, whereby
each of the plurality of springs cancels out a rotational force applied to the tub.

2. The laundry treating apparatus of claim 1, wherein the plurality of springs is disposed such that:
upper ends of the two springs disposed at the front and upper ends of the two springs disposed at the rear are disposed so as to face each other or to face away from each other, thereby achieving the front-to-back symmetry; or
upper ends of the two springs disposed at the left and upper ends of the two springs disposed at the right are disposed so as to face each other or to face away from each other, thereby achieving the left-to-right symmetry.

3. The laundry treating apparatus of claim 1, further comprising:
a spring holder coupled to at least one end of the spring, the spring holder being configured to fix the spring, wherein
the spring holder is seated on the support frame and guides a coupling direction of the spring.

4. The laundry treating apparatus of claim 3, wherein
the spring holder comprises:
a spring terminal configured to restrict one end of the spring to fix the spring at a set position; and
a seating guide configured to guide a seating position and a seating direction of the spring holder seated on the support frame, and
the seating position and the seating direction of the spring holder determine a coupling direction of the spring and dispose the plurality of springs in the front-to-back symmetry or the left-to-right symmetry.

5. The laundry treating apparatus of claim 4, wherein
the spring holder comprises:
a flat seating body provided with the seating guide; and
a cylindrical coupling body protruding from the seating body, the coupling body being provided on an outer circumferential surface thereof with the spring terminal, and
the spring is coupled to the outer circumferential surface of the coupling body.

6. The laundry treating apparatus of claim 5, wherein
the seating guide comprises a guide protrusion protruding from the seating body in a direction opposite the coupling body,
the support frame is provided with a guide recess configured to receive the guide protrusion, and
the seating position and the seating direction of the spring holder are defined by coupling between the guide protrusion and the guide recess.

7. The laundry treating apparatus of claim 6, wherein
the support frame further comprises:
an upper support frame on which a circumference of a lower surface of the tub is seated; and
a lower support frame disposed under the upper support frame so as to be spaced apart from the upper support frame,
the spring is provided between the upper support frame and the lower support frame,
the spring is seated on the lower support frame, and
the upper support frame is seated on the spring.

8. The laundry treating apparatus of claim 7, wherein
the spring holder is further coupled to the other end of the spring, and
the upper support frame is seated on the spring holder.

9. The laundry treating apparatus of claim 8, wherein an installation plate of the support frame on which the spring holder is seated is provided so as to be inclined toward an inside of the cabinet.

10. The laundry treating apparatus of claim 9, wherein the plurality of springs is provided so as to be inclined toward the inside of the cabinet.

11. The laundry treating apparatus of claim 1, wherein the plurality of springs has identical specifications, including a diameter and a number of turns.
